# EUROPÄISCHE PATENTSCHRIFT

(11) **EP 3 793 926 B1**
(45) Veröffentlichungstag und Bekanntmachung des Hinweises auf die Patenterteilung: **24.04.2024**
(21) Anmeldenummer: 19722630.1
(22) Anmeldetag: 13.05.2019
(51) Int. Cl.: B66B 5/00, B66B 25/00

(54) **VERFAHREN UND VORRICHTUNG ZUM ÜBERWACHEN EINES ZUSTANDS EINER PERSONENTRANSPORTANLAGE UNTER VERWENDUNG EINES DIGITALEN DOPPELGÄNGERS**
METHOD AND DEVICE FOR MONITORING A CONDITION OF A PERSON TRANSPORT ASSEMBLY THROUGH THE USE OF A DIGITAL DOPPELGÄNGER
PROCÉDÉ ET DISPOSITIF DE SURVEILLANCE D'UN ÉTAT D'UNE INSTALLATION DE TRANSPORT DE PERSONNES AU MOYEN D'UN DOUBLE NUMÉRIQUE

(30) Priorität: 14.05.2018 EP 18172076
(43) Veröffentlichungstag der Anmeldung: 24.03.2021
(73) Patentinhaber: INVENTIO AG, 6052 Hergiswil (CH)
(72) Erfinder: NOVACEK, Thomas, 2320 Schwechat (AT); PFEILER, Alexander, 1100 Wien (AT); SANDER, Christoph, 1030 Wien (AT); LAGLBAUER, Gerd, 2391 Kaltenleutgeben (AT); DRAGSITS, Hannes, 1140 Wien (AT)
(74) Vertreter: Inventio AG
(86) Internationale Anmeldenummer: PCT/EP2019/062122
(87) Internationale Veröffentlichungsnummer: WO 2019/219553

(56) Entgegenhaltungen:
- WO-A1-2019/115378
- CN-A- 103 508 303
- CN-A- 106 586 796
- US-A1- 2007 250 199
- US-A1- 2015 154 324

## Beschreibung

Die vorliegende Erfindung betrifft ein Verfahren und eine Vorrichtung zum Überwachen von Eigenschaften einer Personentransportanlage die als Fahrtreppe oder Fahrsteig ausgestaltet ist. Ferner betrifft die Erfindung eine mit einer vorgeschlagenen Vorrichtung ausgestattete Personentransportanlage, ein zur Durchführung des vorgeschlagenen Verfahrens ausgebildetes Computerprogrammprodukt sowie ein dieses Computerprogrammprodukt speicherndes computerlesbares Medium.

Personentransportanlagen in Form von Fahrtreppen oder Fahrsteigen dienen dazu, Personen innerhalb von Gebäuden oder Bauwerken zu befördern. Dabei muss stets eine ausreichende Betriebssicherheit, aber auch eine möglichst durchgängige Verfügbarkeit gewährleistet sein. Hierfür werden Personentransportanlagen herkömmlich meist in regelmäßigen Intervallen kontrolliert und/oder gewartet. Die Intervalle werden dabei in der Regel basierend auf Erfahrungen mit ähnlichen Personentransportanlagen festgelegt, wobei die Intervalle zur Wahrung der Betriebssicherung ausreichend kurz gewählt werden müssen, so dass rechtzeitig vor Eintritt etwaiger sicherheitsgefährdender Betriebsbedingungen eine Kontrolle bzw. Wartung durchgeführt wird.

Bei älteren Personentransportanlagen werden die Kontrollen dabei meist völlig unabhängig vom tatsächlichen aktuellen Zustand der Personentransportanlage durchgeführt. Das heißt, ein Techniker muss die Personentransportanlage besuchen und vor Ort inspizieren. Häufig wird dabei erkannt, dass keinerlei Wartung dringend notwendig ist. Der Besuch des Technikers stellt sich somit als überflüssig heraus und verursacht unnötige Kosten. Andererseits wird für den Fall, dass der Techniker tatsächlich Wartungsbedarf erkennt, in vielen Fällen eine weitere Anfahrt erforderlich, da der Techniker erst vor Ort feststellen kann, welche Komponenten der Personentransportanlage einer Wartung bedürfen, und somit erst vor Ort ersichtlich wird, dass für eine Wartung bzw. Reparatur beispielsweise Ersatzteile oder spezielle Werkzeuge benötigt werden. Ein weiteres Problem besteht darin, dass nach ein paar Jahren - insbesondere wenn die Wartung von Drittfirmen durchgeführt wird - die Anlage nicht mehr durchgehend technisch dokumentiert ist und es ist nur vor Ort feststellbar, welche Komponenten original sind und welche Komponenten durch Drittprodukte ersetzt worden sind, da es in dieser Branche sehr viele Anbieter ausschließlich für Ersatzteile und für die Wartung gibt.

Bei neueren Personentransportanlagen besteht teilweise bereits eine Möglichkeit, beispielsweise mithilfe von Sensoren und/oder durch ein Überwachen von deren aktiven Komponenten, das heißt zum Beispiel durch ein Überwachen eines Betriebs einer Antriebsmaschine der Personentransportanlage, vorab und/oder von einem externen Kontrollzentrum aus Hinweise darüber zu erhalten, dass sich ein Zustand der Personentransportanlage verändert hat und dies eine Kontrolle bzw. Wartung der Personentransportanlage notwendig erscheinen lässt. Solche Personentransportanlagen werden beispielsweise in der WO2018/177708 A1 und in der CN 106 586 796 A beschrieben. Hierdurch können Wartungsintervalle gegebenenfalls verlängert bzw. bedarfsgerecht angepasst werden. Allerdings kann auch in diesem Fall ein Techniker meist erst durch einen Besuch vor Ort erkennen, ob tatsächlich ein Wartungsbedarf besteht und ob eventuell Ersatzteile oder spezielle Werkzeuge benötigt werden. Auch bei diesen Anlagen kann je nach Wartungsanbieter nach einer gewissen Zeit nicht mehr eine durchgehende technische Dokumentation erwartet werden.

Es kann unter anderem ein Bedarf an einem Verfahren oder einer Vorrichtung bestehen, mithilfe derer eine Überwachung von Eigenschaften einer Personentransportanlage effizienter, einfacher, mit weniger Aufwand, ohne eine Notwendigkeit einer Inspektion vor Ort und/oder besser prognostizierbar durchgeführt werden kann. Ferner kann ein Bedarf an einer entsprechend ausgerüsteten Personentransportanlage, einem Computerprogrammprodukt zum Durchführen des Verfahrens auf einer programmierbaren Vorrichtung sowie einem computerlesbaren Medium mit einem darauf gespeicherten, solchen Computerprogrammprodukt bestehen.

Einem solchen Bedarf kann durch den Gegenstand gemäß einem der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird ein Verfahren zum Überwachen eines Zustands einer Personentransportanlage unter Verwendung eines Aktualisierter-Digitaler-Doppelgänger-Datensatzes gemäß Anspruch 1. vorgeschlagen. Dieser umfasst die charakterisierenden Eigenschaften von Bauteilen der physischen Personentransportanlage nach deren Zusammenbau und Installation in einem Bauwerk in maschinen-verarbeitbarer Weise. Der Aktualisierter-Digitaler-Doppelgänger-Datensatz wird nachfolgend in abgekürzter Form als "ADDD" bezeichnet.

Ferner ist in der physischen Personentransportanlage mindestens eine Erfassungseinrichtung angeordnet, welche Veränderungen mindestens einer charakterisierenden Eigenschaft erfasst, die verschleißbedingt an einem umlaufend angeordneten, physischen Bauteil der Personentransportanlage auftreten.

Um das Verfahren durchführen zu können, muss wie vorangehend erwähnt, ein ADDD vorhanden sein. Das Erzeugen des ADDD umfasst dabei zumindest die folgenden Schritte, vorzugsweise aber nicht zwingend streng in der angegebenen Reihenfolge:
(i) Erstellen eines Kommissionierungs-Digitaler-Doppelgänger-Datensatzes aus Bauteilmodell-Datensätzen mit Soll-Daten, welche charakterisierende Eigenschaften von Bauteilen der Personentransportanlage in einer Soll-Konfiguration wiedergeben;
(ii) Erstellen eines Fertigstellungs-Digitaler-Doppelgänger-Datensatzes basierend auf dem Kommissionierungs-Digitaler-Doppelgänger-Datensatz durch Messen von Ist-Daten, welche charakterisierende Eigenschaften von Bauteilen der physischen Personentransportanlage in der tatsächlichen Konfiguration der Personentransportanlage direkt nach deren Zusammenbau und Installation in einem Bauwerk wiedergeben und Ersetzen von Soll-Daten in dem Kommissionierungs-Digitaler-Doppelgänger-Datensatz durch entsprechende Ist-Daten; und
(iii) Erstellen und kontinuierliches Aktualisieren des ADDD basierend auf dem Fertigstellungs-Digitaler-Doppelgänger-Datensatz durch Modifizieren des Fertigstellungs-Digitaler-Doppelgänger-Datensatzes während des Betriebs der physischen Personentransportanlage unter Berücksichtigung von durch die Erfassungseinrichtung erfassten Messwerten, welche Veränderungen von charakterisierenden Eigenschaften von umlaufenden Bauteilen der physischen Personentransportanlage während deren Betriebes wiedergeben. Die Erstellung und kontinuierliche Aktualisierung des ADDD erfolgt insbesondere dadurch, dass diese Veränderungen als Messdaten auf den ADDD übertagen werden und diesen entsprechend, charakterisierende Eigenschaften der von den übertragenen Messdaten betroffenen Bauteilmodell-Datensätze aktualisiert werden.

Mit anderen Worten kann ein Erstellen und Aktualisieren des ADDD in mehreren Teilschritten erfolgen. Dabei können die in dem Datensatz enthaltenen Daten sukzessive verfeinert und präzisiert werden, so dass die charakterisierenden Eigenschaften der in der physischen Personentransportanlage verbauten Bauteile mit fortlaufender Erstellung immer genauer hinsichtlich ihrer tatsächlichen aktuellen Konfiguration im ADDD wiedergegeben werden und mit fortlaufendem Betrieb der physischen Personentransportanlage aktuell gehalten werden.

Das heißt, dass die am physischen Bauteil erfassten Veränderungen mindestens eine charakterisierende Eigenschaft mindestens eines Bauteilmodell-Datensatzes beeinflussen, beziehungsweise diese charakterisierende Eigenschaft des Bauteilmodell-Datensatzes entsprechend aktualisiert werden muss. Wie weiter unten in Zusammenhang mit den Figuren ausführlich er erklärt ist, betreffen die erfassten Veränderungen üblicherweise mehrere charakterisierende Eigenschaften von mehreren Bauteilmodell-Datensätzen. Jede einzelne dieser charakterisierenden Eigenschaften muss für jeden betroffenen Bauteilmodell-Datensatz aus der erfassten Veränderung unter Zuhilfenahme der im ADDD vorhandenen geometrischen Verhältnisse, den in den Bauteilmodell-Datensätzen hinterlegten physikalischen Eigenschaften sowie den bekannten Berechnungsmethoden aus den Gebieten der Physik, der Mechanik und der Festigkeitslehre errechnet werden. Die aufgrund der erfassten Veränderungen ermittelten charakterisierenden Eigenschaften ersetzen nun die entsprechenden, bisherigen charakterisierenden Eigenschaften der betroffenen Bauteilmodell-Datensätze, wodurch diese, beziehungsweise der ADDD aktualisiert werden.

Mittels der Überwachung können Veränderungen und Veränderungstrends der mindestens einen, aktualisierten charakterisierenden Eigenschaft des umlaufend angeordneten physischen Bauteiles und deren Einfluss auf das Bauteil und auf die mit diesem Bauteil in Interaktion stehenden Bauteile unter Zuhilfenahme des ADDD durch Berechnungen und/oder durch statische und dynamische Simulationen verfolgt und beurteilt werden.

Zur Beurteilung können den charakterisierenden Eigenschaften von Bauteilen zugeordnete Beurteilungskriterien wie beispielsweise eine maximale Kettenlängung von Förderketten, eine Obergrenze der Leistungsaufnahme der Antriebsmaschine, maximale und/oder minimale Abmaße bei Verschleißstellen und dergleichen mehr vorhanden sein. Diese erlauben einen einfachen Vergleich (statische Betrachtung) der veränderten charakterisierenden Eigenschaft und geben beispielsweise die maximal zulässigen Abweichungen ausgehend von Soll-Werten vor. Die charakterisierenden Eigenschaften von Bauteilen des ADDD können mit diesen Beurteilungskriterien verglichen werden. Ferner können durch dynamische Simulationen (beispielsweise mittels einer Finite-Elemente-Analyse die Festigkeitsabnahme infolge einer Materialabtragung durch Verschleiß) die Auswirkungen der veränderten charakterisierenden Eigenschaften auf das betreffende Bauteil und deren Auswirkung auf die mit diesem Bauteil in Interaktion stehenden Bauteile (beispielsweise erhöhte Bewegungsfreiheit beziehungsweise Spiel infolge des Verschleißes und dadurch Kollisionsgefahren) beurteilt werden.

Gemäß einem zweiten Aspekt der Erfindung wird eine Vorrichtung zum Überwachen eines Zustands einer Personentransportanlage gemäß Anspruch 10 vorgeschlagen. Diese umfasst einen Aktualisierter- Digitaler-Doppelgänger-Datensatz, der charakterisierende Eigenschaften von Bauteilen der physischen Personentransportanlage in einer tatsächlichen Konfiguration der physischen Personentransportanlage nach deren Zusammenbau und Installation in einem Bauwerk in maschinen-verarbeitbarer Weise wiedergibt. Zudem umfasst die Vorrichtung mindestens eine Erfassungseinrichtung, durch welche Veränderungen mindestens einer charakterisierenden Eigenschaft erfassbar sind, die verschleißbedingt an einem umlaufend angeordneten, physischen Bauteil der physischen Personentransportanlage auftreten. Diese Veränderungen sind als Messdaten zwecks Aktualisierung vorhandener Daten auf den ADDD übertragbar.

Wie bereits erwähnt, ist der ADDD erzeugbar durch:
(i) Erstellen eines Kommissionierungs-Digitaler-Doppelgänger-Datensatzes mit Soll-Daten, welche charakterisierende Eigenschaften von Bauteilen der Personentransportanlage in einer Soll-Konfiguration wiedergeben;
(ii) Erstellen eines Fertigstellungs-Digitaler-Doppelgänger-Datensatzes basierend auf dem Kommissionierungs-Digitaler-Doppelgänger-Datensatz durch Messen von Ist-Daten, welche charakterisierende Eigenschaften von Bauteilen der physischen Personentransportanlage in der tatsächlichen Konfiguration der Personentransportanlage direkt nach deren Zusammenbau und Installation in einem Bauwerk wiedergeben und Ersetzen von Soll-Daten in dem Kommissionierungs-Digitaler-Doppelgänger-Datensatz durch entsprechende Ist-Daten; und
(iii) Erstellen und kontinuierliches Aktualisieren des ADDD basierend auf dem Fertigstellungs-Digitaler-Doppelgänger-Datensatz durch Modifizieren des Fertigstellungs-Digitaler-Doppelgänger-Datensatzes während des Betriebs der physischen Personentransportanlage (2) unter Berücksichtigung von durch die Erfassungseinrichtung (200) erfassten Messwerten, welche Änderungen von charakterisierenden Eigenschaften von umlaufenden Bauteilen der physischen Personentransportanlage während deren Betriebes wiedergeben.

Mittels statischer und dynamischer Simulationen am ADDD können die verschleißbedingten Veränderungen und Veränderungstrends der charakterisierenden Eigenschaften des umlaufend angeordneten virtuellen Bauteils und deren Auswirkungen auf mit diesem Bauteil in Interaktion stehenden virtuellen Bauteile der Personentransportanlage jederzeit verfolgt und beurteilt werden. Da die virtuellen Bauteile des ADDD ein möglichst exaktes Abbild der entsprechenden physischen Bauteile der physischen Personentransportanlage sind, sind die Berechnungen, Erkenntnisse und Beurteilungen zu den virtuellen Bauteilen auch nahezu 1:1 für die entsprechenden physischen Bauteile der physischen Personentransportanlage gültig. Gemäß einem dritten Aspekt der Erfindung wird eine Personentransportanlage gemäß Anspruch 11 vorgeschlagen.

Gemäß einem vierten Aspekt der Erfindung wird ein Computerprogrammprodukt gemäß Anspruch 12 vorgeschlagen.

Gemäß einem fünften Aspekt der Erfindung wird ein computerlesbares Medium vorgeschlagen, auf dem ein Computerprogrammprodukt gemäß einer Ausführungsform des vierten Aspekts der Erfindung gespeichert ist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend angemerkt, müssen Personentransportanlagen bisher meist vor Ort inspiziert werden, um erkennen zu können, ob tatsächlich eine Wartung bzw. Reparatur aktuell notwendig ist und, für den Fall, dass dies zutrifft, welche Maßnahmen konkret ergriffen werden müssen, das heißt zum Beispiel welche Ersatzteile und/oder Werkzeuge erforderlich sind.

Um dies zu umgehen, wird vorgeschlagen, zur Überwachung von den, den aktuellen Zustand der Personentransportanlage charakterisierenden Eigenschaften einen sogenannten Aktualisierter-Digitaler-Doppelgänger-Datensatz zu verwenden. Der ADDD soll dabei Daten umfassen, welche charakterisierende Eigenschaften der die Personentransportanlage bildenden Bauteile charakterisieren und stellt in seiner Gesamtheit eine möglichst vollständige, digitale Abbildung der dem ADDD zugeordneten physischen Personentransportanlage dar. Dabei sollen die Daten des ADDD die Eigenschaften der Bauteile in ihrer tatsächlichen Konfiguration charakterisieren, das heißt in einer Konfiguration, in der die Bauteile vollständig fertiggestellt und dann zu der Personentransportanlage zusammengebaut und in einem Bauwerk installiert wurden. Ebenso werden laufend betriebsbedingte Veränderungen auf den ADDD übertragen, so dass dieser auch über die Lebensdauer hinweg immer auf den aktuellen Stand der zugeordneten, physischen Personentransportanlage gebracht wird.

Mit anderen Worten geben die in dem ADDD enthaltenen Daten nicht lediglich Soll-Eigenschaften der Bauteile wieder, wie sie beispielsweise beim Planen, Konzipieren bzw. Kommissionieren der Personentransportanlage angenommen werden und wie sie beispielsweise aus hierbei verwendeten CAD-Daten betreffend die Bauteile entnommen werden können. Stattdessen sollen die in dem ADDD enthaltenen Daten die tatsächlichen Eigenschaften der in der fertig montierten und installierten Personentransportanlage verbauten Bauteile wiedergeben. Der ADDD kann somit als virtuelles Abbild der fertigen Personentransportanlage bzw. der darin enthaltenen Bauteile angesehen werden.

Die in dem ADDD enthaltenen Daten sollen dabei die charakterisierenden Eigenschaften der Bauteile ausreichend detailliert widerspiegeln, um daraus Aussagen über aktuelle strukturelle und/oder funktionelle Eigenschaften der physischen Personentransportanlage ableiten zu können. Insbesondere sollen anhand des ADDD Aussagen über aktuelle strukturelle und/oder funktionelle Eigenschaften, welche einen aktualisierten Zustand der gesamten Personentransportanlage charakterisieren, abgeleitet werden können, die für eine Beurteilung von deren aktueller oder zukünftiger Betriebssicherheit, deren aktueller oder zukünftiger Verfügbarkeit und/oder einer aktuellen oder zukünftigen Notwendigkeit für eine Wartung oder Reparatur herangezogen werden können.

Ein besonderer Vorteil ergibt sich aus der Verwendung des ADDD während der gesamten Lebensdauer der physischen Personentransportanlage. Wenn nämlich der ADDD weiterverwendet werden soll, wird eine durchgehende Dokumentation beziehungsweise Nachführung der Daten des ADDD erzwungen, da sonst die Betriebsüberwachung, die Wartungsvorhersagen und die Zustandsermittlungen auf fehlerhaften Daten beruhen. Das bedeutet, dass bei einem Ersatz von Bauteilen die charakterisierenden Eigenschaften der Ersatzteile digitalisiert erfasst werden müssen. Bei den Wartungsarbeiten werden im ADDD die charakterisierenden Eigenschaften der ausgebauten Bauteile durch die charakterisierenden Eigenschaften der Ersatzteile ersetzt. Ebenso sind allfällige Einstellungsmasse zu erfassen und auf den ADDD zu übertragen. Um den Monteuren die Arbeit zu erleichtern, können die Ausmessarbeiten der Bauteile und Einstellungsmasse durch optische Erfassungseinrichtungen wie beispielsweise ein Laserscanner oder eine TOF-Kamera (time of flight camera) auf der Baustelle erfasst werden. Deren Daten werden anschließend durch ein Verarbeitungsprogramm automatisch ausgewertet, für den ADDD aufbereitet und auf diesen übertragen.

Damit unterscheidet sich der ADDD beispielsweise von digitalen Daten, welche herkömmlich bei einer Herstellung von Personentransportanlagen erzeugt bzw. genutzt werden. Beispielsweise ist es üblich, bei einer Planung, Konzipierung bzw. Kommissionierung einer Personentransportanlage die dabei verwendeten Bauteile mithilfe von Computern und unter Verwendung von CAD- Programmen zu planen oder zu designen, sodass entsprechende CAD-Daten beispielsweise eine Soll-Geometrie eines Bauteils wiedergeben. Solche CAD-Daten geben jedoch nicht an, welche Geometrie ein gefertigtes Bauteil tatsächlich hat, wobei beispielsweise Fertigungstoleranzen oder Ähnliches dazu führen können, dass sich die tatsächliche Geometrie signifikant von der Soll-Geometrie unterscheidet.

Insbesondere geben herkömmlich verwendete Daten wie CAD-Daten nicht an, welche charakterisierenden Eigenschaften Bauteile angenommen haben, nachdem sie zu der Personentransportanlage zusammengebaut und in einem Bauwerk installiert wurden. Je nachdem, wie der Zusammenbau und die Installation durchgeführt wurden, können sich erhebliche Änderungen bei den charakterisierenden Eigenschaften der Bauteile im Vergleich zu deren ursprünglich entworfenen Soll-Eigenschaften und/oder im Vergleich zu deren Eigenschaften direkt nach deren Herstellung, aber vor deren Zusammenbau bzw. Installation, ergeben.

Der ADDD unterscheidet sich auch von Daten, wie sie herkömmlich teilweise während einer Fertigung von komplexen Werkstücken oder Maschinen verwendet werden. Beispielsweise wird in der DE 10 2015 217 855 A1 ein Verfahren zur Prüfung einer Konsistenz zwischen Referenzdaten eines Fertigungsobjektes und Daten eines sogenannten digitalen Zwillings des Fertigungsobjekts beschrieben. Dabei wird ein als digitaler Zwilling bezeichnetes digitales Abbild eines Werkstücks während der Fertigung mit dem Zustand des Werkstücks synchronisiert. Für den Produktionsablauf bedeutet dies, dass nach jedem Produktionsschritt die den digitalen Zwilling wiedergebenden Daten derart modifiziert werden, dass den durch den Produktionsschritt zu bewirkenden Änderungen von Eigenschaften des Werkstücks Rechnung getragen werden soll.

Beispielsweise kann vorgesehen sein, in einem Fertigungsschritt einen Bereich des Werkstücks durch Schleifen, Drehen oder Ähnliches gemäß Soll-Vorgaben abzutragen, sodass nach Durchführung des Fertigungsschritts auch der digitale Zwilling gemäß den Soll-Vorgaben modifiziert wird. Auf diese Weise soll der digitale Zwilling stets eine Information über den aktuellen Zwischenzustand des Werkstücks während dessen Fertigung liefern.

Allerdings ist gemäss der DE 10 2015 217 855 A1 insbesondere bei der Fertigung von Bauteilen für Personentransportanlagen nicht vorgesehen, in dem digitalen Zwilling Daten zu berücksichtigen, welche tatsächliche charakterisierende Eigenschaften der Bauteile wiedergeben, insbesondere tatsächliche charakterisierende Eigenschaften der Bauteile nach deren Zusammenbau zu einer fertigen Personentransportanlage und deren Installation im Bauwerk. Stattdessen beruhen die in dem digitalen Zwilling aufgenommenen Daten zumeist ausschließlich auf Soll-Eigenschaften wie sie beispielsweise in Form von CAD-Daten wiedergegeben werden können.

Um den Zustand einer Personentransportanlage hinreichend genau und/oder zuverlässig überwachen oder gegebenenfalls sogar prognostizieren zu können, wird nun vorgeschlagen, hierfür verwendbare Daten in Form des ADDD bereitzustellen. Der ADDD liefert dabei über bloße Soll-Eigenschaften hinausgehende, durchgehend oder periodisch mit der physischen Personentransportanlage abgeglichene und aktualisierte Informationen über die charakterisierenden Eigenschaften der in der Personentransportanlage verbauten Bauteile in ihrer tatsächlichen Konfiguration. Solche Informationen können vorteilhaft dazu verwendet werden, beispielsweise Abweichungen der tatsächlichen charakterisierenden Eigenschaften von ursprünglich konzipierten charakterisierenden Eigenschaften der Personentransportanlage erkennen zu können. Aus solchen Abweichungen können dann geeignete Rückschlüsse gezogen werden, beispielsweise ob bereits ein Bedarf für eine Wartung oder Reparatur der Personentransportanlage besteht, ob ein Risiko für erhöhten oder vorzeitigen Verschleiß besteht, etc. Beispielsweise können die Abweichungen aus bei der Fertigung der Bauteile eintretenden Fertigungstoleranzen, aus beim Zusammenbau der Bauteile oder bei deren Installation im Bauwerk bewirkten Veränderungen der charakterisierenden Eigenschaften der Bauteile und/oder beim letztendlichen Betrieb der Personentransportanlage auftretenden Veränderungen der charakterisierenden Eigenschaften der Bauteile beispielsweise aufgrund von Verschleiß herrühren.

Dadurch, dass der ADDD als virtuelle digitale Kopie der tatsächlichen Personentransportanlage Rückschlüsse auf in der Personentransportanlage aktuell vorherrschende charakterisierende Eigenschaften zulässt, können bestenfalls allein durch Analyse und/oder Verarbeitung des ADDD Informationen gewonnen werden, die Rückschlüsse auf den aktuellen Zustand der Personentransportanlage und insbesondere Rückschlüsse über eine eventuell notwendige Wartung oder Reparatur ermöglichen. Dabei können gegebenenfalls sogar Informationen darüber abgeleitet werden, welche Ersatzteile und/oder Werkzeuge für eine anstehende Wartung oder Reparatur benötigt werden.

Der ADDD kann dabei in einem zur Durchführung des hierin vorgeschlagenen Verfahrens konfigurierten Computer bzw. einer entsprechenden Datenverarbeitungsanlage gespeichert, analysiert und/oder verarbeitet werden. Insbesondere können der Computer bzw. die Datenverarbeitungsanlage entfernt von der zu überwachenden Personentransportanlage, beispielsweise in einem entfernten Überwachungszentrum, angeordnet sein.

Dementsprechend ermöglicht die Verwendung des ADDD, den Zustand der die Personentransportanlage charakterisierenden Eigenschaften kontinuierlich oder in geeigneten Zeitabständen fern von der physischen Personentransportanlage zu überwachen, um insbesondere Änderungen, die eine Wartung oder Reparatur notwendig erscheinen lassen, zu erkennen. Gegebenenfalls können hierauf basierend konkrete Informationen betreffend bei der Wartung beziehungsweise Reparatur durchzuführender Arbeiten vorab allein basierend auf einer Analyse des ADDD abgeleitet werden, ohne dass ein Techniker die Personentransportanlage tatsächlich vor Ort inspizieren müsste. Hierdurch können erheblicher Aufwand und Kosten eingespart werden.

Erfindungsgemäß werden die von der Erfassungseinrichtung übermittelten Messdaten mit einer Zeitinformation in einem Logfile abgespeichert. Dies hat einerseits den Vorteil, dass eine Messdatenhistorie vorhanden ist, aus der beispielsweise besondere Ereignisse herausgelesen werden können, wie zum Beispiel eine momentane übermäßige Krafteinwirkung durch eine unsachgemäße Benutzung oder durch äußere Einwirkungen wie seismische Stöße und dergleichen mehr.

Erfindungsgemäß wird mittels der im Logfile abgespeicherten Messdaten sowie von im Logfile gespeicherten Betriebsdaten mittels statistischer Methoden ein Veränderungstrend der Messwerte ermittelt. Betriebsdaten sind Daten, die während des Betriebes einer Personentransportanlage anfallen, beispielsweise die gesamte Betriebslaufzeit, die Leistungsaufnahme der Antriebsmaschine, die Umgebungstemperatur, die Betriebstemperatur und dergleichen mehr. Die dadurch gewonnenen Erkenntnisse lassen sich auf vielerlei Weise verwenden. Wenn der Veränderungstrend linear ist, lässt sich für das davon betroffene Bauteil das Lebensdauerende infolge stetigen Verschleißes recht gut voraussagen. Wenn der Veränderungstrend eine abnehmende Tendenz aufweist, weist dies auf ein Einlaufverhalten und damit auf einen zunehmend stabileren Zustand des betroffenen Bauteils hin. Bei zunehmender Tendenz des Veränderungstrends können verstärkte Verschleißerscheinungen diagnostiziert werden. Weiterführende Vorteile sind weiter unten angegeben.

Gemäß einer weiteren Ausführungsform kann die Übertragung der Messwerte kontinuierlich, periodisch und/oder abhängig vom Veränderungstrend der Messwerte erfolgen. Bei einer Abhängigkeit vom Veränderungstrend bedeutet dies, dass bei linearer Tendenz des Veränderungstrends eine fixe Periodendauer gewählt werden kann. Bei einer abnehmenden Tendenz kann die Periodendauer zunehmend verlängert werden, während bei zunehmender Tendenz die Periodendauer zwischen zwei Messungen zunehmend verkürzt werden kann.

Gemäß einer weiteren Ausführungsform können die beim Aktualisieren des ADDD zu berücksichtigenden, verschleißbedingten charakterisierenden Eigenschaften des umlaufend angeordneten physischen Bauteiles geometrische Abmessungen des Bauteils, das Gewicht des Bauteils und/oder die Oberflächenbeschaffenheit des Bauteils sein.

Mit anderen Worten können mehrere verschiedenartige charakterisierende Eigenschaften von einem Bauteil oder von mehreren Bauteilen einer Personentransportanlage, die durch Verschleißerscheinungen Veränderungen unterworfen sind, beispielsweise durch eine in der physischen Personentransportanlage verbaute Sensorik vermessen werden. Die gewonnenen Messergebnisse können als Daten in dem ADDD abgelegt werden. Geometrische Abmessungen der Bauteile können beispielsweise eine Länge, eine Breite, eine Höhe, ein Querschnitt, Radien, Verrundungen, etc. der Bauteile sein. Die Oberflächenbeschaffenheit der Bauteile kann beispielsweise Rauigkeiten, Texturen, Beschichtungen, Farben, Reflektivitäten, etc. der Bauteile umfassen.

Die charakterisierenden Eigenschaften können sich auf einzelne Bauteile oder Bauteilgruppen beziehen. Beispielsweise können sich die charakterisierenden Eigenschaften auf einzelne Bauteile beziehen, aus denen größere, komplexere Bauteilgruppen zusammengesetzt werden. Alternativ oder ergänzend können sich die Eigenschaften auch auf aus mehreren Bauteilen zusammengesetzte komplexere Gerätschaften wie zum Beispiel Antriebsmotoren, Getriebeeinheiten, Förderketten, etc. beziehen.

Die charakterisierenden Eigenschaften können mit hoher Präzision ermittelt bzw. vermessen werden. Insbesondere können die charakterisierenden Eigenschaften mit einer Präzision ermittelt bzw. vermessen werden, die genauer ist als bei der Fertigung der Bauteile einzuhaltende Toleranzen.

Da bei Personentransportanlagen wie Fahrtreppen und Fahrsteigen insbesondere die umlaufenden Bauteile Verschleißerscheinungen unterworfen sind, kann die von der Erfassungseinrichtung gemessene, verschleißbedingt veränderte, charakterisierende Eigenschaft des umlaufend angeordneten physischen Bauteiles:
- die Länge einer Antriebskette beziehungsweise ein aus der verschleißbedingten Längenänderung resultierender Durchhang der Antriebskette sein;
- die Länge einer Förderkette beziehungsweise eine aus der verschleißbedingten Längenänderung resultierende Verschiebung von einem Umlenkbogen oder Umlenkkettenrad von deren Förderkettenspannvorrichtung sein; und/oder
- die Länge eines Handlaufes beziehungsweise eine aus der verschleißbedingten Längenänderung resultierende Verschiebung von einem Rollenbogen von deren Handlaufspannvorrichtung sein.

Gemäß einer weiteren Ausführungsform umfasst das Überwachen des Zustandes der physischen Personentransportanlage auch ein Simulieren zukünftiger charakterisierender Eigenschaften der Personentransportanlage unter Verwendung des aktualisierten Digitaler-Doppelgänger-Datensatzes.

Mit anderen Worten sollen mithilfe des aktualisierten Digitaler-Doppelgänger-Datensatzes vorzugsweise nicht lediglich in der Personentransportanlage aktuell vorherrschende Eigenschaften überwacht werden können, sondern mittels durchzuführender Simulationen unter Verwendung des aktualisierten Digitaler-Doppelgänger-Datensatzes auch Rückschlüsse über zukünftig in der Personentransportanlage vorherrschende charakterisierende Eigenschaften gewonnen werden können.

Die Simulationen können dabei auf einem Computersystem ausgeführt werden. Mithilfe der Simulationen können ausgehend von aktuell in dem aktualisierten Digitaler-Doppelgänger-Datensatz enthaltenen Daten sowie gegebenenfalls unter Berücksichtigung von früher in dem aktualisierten Digitaler-Doppelgänger-Datensatz enthaltenen Daten Rückschlüsse auf eine zeitliche Entwicklung bei den repräsentierten charakterisierenden Eigenschaften gezogen werden und somit Prognosen oder Extrapolation betreffend zukünftige charakterisierende Eigenschaften der Bauteile gewonnen werden. Bei den Simulationen können sowohl naturgesetzliche Gegebenheiten berücksichtigt werden als auch auf Erfahrungen bei anderen Personentransportanlagen zurückgegriffen werden.

Beispielsweise können Simulationen berücksichtigen, wie sich zum Beispiel bereits eingetretene verschleißbedingte Veränderungen bei charakterisierenden Eigenschaften von Bauteilen auf zukünftig zu erwartende weitere Veränderungen bei diesen charakterisierenden Eigenschaften auswirken. Alternativ oder ergänzend können bei den Simulationen Erfahrungen berücksichtigt werden, die aus Experimenten und/oder durch die Beobachtung anderer Personentransportanlagen gewonnen wurden und aus denen zum Beispiel eine Aussage darüber abgeleitet werden kann, wann eine eingetretene oder zukünftig zu erwartende Veränderung bei charakterisierenden Eigenschaften eines Bauteils als für die Funktion der gesamten Personentransportanlage wesentlich anzunehmen ist, sodass geeignete Maßnahmen beispielsweise im Rahmen einer Wartung oder Reparatur eingeleitet werden sollten.

Mithilfe des Aktualisierter-Digitaler-Doppelgänger-Datensatzes können auch neue, verbesserte physische Bauteile und insbesondere Steuerungskomponenten (Hard und Software) entwickelt und getestet werden. Hierbei kann nach dem Hardware-in-the-Loop Ansatz der Bauteilmodell-Datensatz einer zu prüfenden Komponente im Aktualisierter-Digitaler-Doppelgänger-Datensatzes deaktiviert und dieser über geeignete Schnittstellen mit dem zu testenden Bauteil verbunden werden. Die geeignete Schnittstelle kann hierbei ein auf die mechanischen und/oder elektrischen Schnittstellen des physischen Bauteils angepasster Prüfstand sein, der mit einem den Aktualisierter-Digitaler-Doppelgänger-Datensatz aufweisenden Computersystem verbunden ist. Anders ausgedrückt wird dem Hardware-in-the-Loop Ansatz gemäss dadurch ein eingebettetes System (z. B. reales elektronisches Steuergerät oder reale mechatronische Komponente, das physische Bauteil oder die physische Bauteilgruppe) über seine Ein- und Ausgänge mit dem Aktualisierter-Digitaler-Doppelgänger-Datensatz verbunden, wobei der Aktualisierter-Digitaler-Doppelgänger-Datensatz als Nachbildung der realen Umgebung des Systems beziehungsweise der gesamten Fahrtreppe oder des gesamten Fahrsteiges dient. Dadurch kann der Aktualisierter-Digitaler-Doppelgänger-Datensatz aus Sicht des Tests zum Absichern von eingebetteten Systemen, zur Unterstützung während der Entwicklung sowie zur vorzeitigen Inbetriebnahme von Maschinen und Anlagen dienen.

Ein weiterer Vorteil des Aktualisierter-Digitaler-Doppelgänger-Datensatzes ist sein inhärenter Systems-Engineering-Ansatz. Im Mittelpunkt des Systems Engineering steht, die vom Kunden gewünschten Anforderungen an das zu liefernde System, die in der Spezifikation enthalten sind, innerhalb des Kosten- und Zeitrahmens zu erfüllen, indem erstens das System in Subsysteme, Geräte und Software heruntergebrochen und spezifiziert wird und zweitens die Implementierung über alle Ebenen kontinuierlich bis zur Übergabe an den Kunden kontrolliert wird. Dabei soll insbesondere das gesamte Problem (Betrieb, Kosten, Zeitplan, Performance, Weiterbildung und Support, Test, Produktion und Wiederverwertung) berücksichtigt werden. Systems Engineering integriert all diese Ingenieursdisziplinen und Fähigkeiten in einen einheitlichen, teamorientierten strukturierten Prozess, der sich je nach Komplexität des Systems über mehrere Ebenen bis zu einem Gerät eines Unterauftragnehmers erstrecken kann. Dieser Prozess wird von der Konzeption über die Produktion bis hin zum Betrieb und in manchen Fällen bis zum Abbau beziehungsweise zur Wiederverwertung angewandt. Durch die Abbildung sämtlicher physischer Bauteile als Bauteilmodell-Datensätze mit all ihren charakterisierenden Eigenschaften und Schnittstelleninformationen - vereinigt und stetig aktualisiert im Aktualisierter-Digitaler-Doppelgänger-Datensatz - bietet dieser eine hervorragende System-Engineering Plattform um in kürzester Zeit die vom Kunden gewünschten Anforderungen an die zu liefernde Fahrtreppe oder den zu liefernden Fahrsteig über die Installation des physischen Produktes hinaus, umzusetzen.

Gemäß einer Ausführungsform der Erfindung kann das hierin vorgeschlagene Verfahren ferner ein Planen von durchzuführenden Wartungsarbeiten an der Personentransportanlage basierend auf den überwachten Eigenschaften der Personentransportanlage umfassen.

Mit anderen Worten können die Informationen, die beim erfindungsgemäßen Überwachen der Eigenschaften der Personentransportanlage gewonnen werden, dazu genutzt werden, um zukünftige Wartungsarbeiten einschließlich dabei notwendiger etwaiger Reparaturen bereits vorab geeignet planen zu können. Dabei kann von Vorteil sein, dass alleine durch Analyse des aktualisierten Digitaler-Doppelgänger-Datensatzes bereits wertvolle Informationen beispielsweise darüber erhalten werden können, welche Veränderungen in einer überwachten Personentransportanlage eingetreten sind und/oder mit welchem Verschleiß bei Bauteilen der Personentransportanlage tatsächlich gerechnet werden muss. Diese Informationen können genutzt werden, um Wartungsarbeiten beispielsweise hinsichtlich eines Wartungszeitpunkts und/oder hinsichtlich bei der Wartung durchzuführender Tätigkeiten und/oder hinsichtlich bei der Wartung vorzuhaltender Ersatzteile bzw. Werkzeuge und/oder hinsichtlich der die Wartung durchführender Techniker, die eventuell spezielle Fähigkeiten oder Wissen haben müssen, planen zu können. Die Planung der Wartungsarbeiten kann dabei in den meisten Fällen rein basierend auf einer Analyse des aktualisierten Digitaler-Doppelgänger-Datensatzes erfolgen, das heißt ohne dass ein Techniker die Personentransportanlage vor Ort inspizieren müsste.

Gemäß einer weiteren Ausführungsform der Erfindung umfasst das vorgeschlagene Verfahren ferner ein Beurteilen von Qualitätseigenschaften eines der umlaufend angeordneten Bauteile basierend auf einer Analyse von ADDD mehrerer das betreffende Bauteil enthaltender Personentransportanlagen.

Mit anderen Worten wird vorgeschlagen, die ADDD' s von mehreren verschiedenen Personentransportanlagen zu nutzen und dahingehend zu analysieren, dass aus ihnen Informationen betreffend das zu untersuchende, umlaufend angeordnete Bauteil gesammelt und analysiert werden. Die Analyse kann beispielsweise umfassen, die Ist-Werte bezüglich charakterisierender Eigenschaften des Bauteils in seiner tatsächlichen Konfiguration nach dem Zusammenbau und der Installation der Personentransportanlage mit vorab angenommenen Soll-Werten und gegebenenfalls unter Berücksichtigung von diesen Soll-Werten zugeordneten Toleranzwerten zu vergleichen. Hierbei werden nicht nur die Ist-Werte eines einzelnen umlaufenden Bauteils mit den Soll-Werten für dieses Bauteil verglichen. Vielmehr werden die Ist-Werte mehrerer umlaufender Bauteile des gleichen Bauteiltyps mit den Soll-Werten dieses Bauteiltyps verglichen.

Beispielsweise kann aus dem häufigen Auftreten von übermäßigen Verschleißerscheinungen oder gar Defekten bei einem bestimmten Typ von Handlaufriemen, welche nach der Fertigung zufriedenstellend den Soll-Vorgaben für diesen Bauteiltyp entsprochen haben, rückgeschlossen werden, dass bereits das Design des betreffenden Handlaufriementyps Qualitätsmängel aufweist, die dann im realen Betrieb beispielsweise zu wiederkehrenden Problemen führen. Zum Beispiel kann erkannt werden, dass bereits im Design eines Bauteiltyps angelegt ist, dass bei diesem Bauteiltyp nach dem Zusammenbau und der Installation der Personentransportanlage oder spätestens bei deren Betrieb übermäßige Veränderungen, insbesondere übermäßiger Verschleiß, auftreten, welche zu einer kurzen Lebensdauer der Bauteile dieses Typs führen. Daraufhin kann das Design des Bauteiltyps eventuell geeignet geändert werden, um die Verschleißerscheinungen zu minimieren, das heißt dessen Robustheit zu erhöhen, und die Lebensdauer des Bauteiltyps zu steigern.

Der vorangehend beschriebene Kommissionierungs-Digitaler-Doppelgänger-Datensatz ist jedoch nicht einfach "ab Stange" verfügbar. Gemäß einer weiteren Ausführungsform umfasst das Erstellen des Kommissionierungs-Digitaler-Doppelgänger-Datensatzes ein vorgängiges Erstellen eines Digitaler-Doppelgänger-Datensatzes unter Berücksichtigung von kundenspezifischen Konfigurierungsdaten sowie ein Erstellen von Fertigungsdaten durch Modifizieren des Digitaler-Doppelgänger-Datensatzes unter Berücksichtigung von produktionsspezifischen Daten.

Mit anderen Worten sollen beim anfänglichen Erstellen des Kommissionierungs-Digitaler-Doppelgänger-Datensatzes sowohl kundenspezifische Konfigurierungsdaten als auch produktionsspezifische Daten berücksichtigt werden. Dabei wird zunächst im Regelfall ein Digitaler-Doppelgänger-Datensatz unter Berücksichtigung der kundenspezifischen Konfigurierungsdaten aus Bauteilmodell-Datensätzen erstellt und dann dieser Digitaler-Doppelgänger-Datensatz unter Berücksichtigung der produktionsspezifischen Daten modifiziert bzw. verfeinert. Eventuell kann das Erstellen des Kommissionierungs-Digitaler-Doppelgänger-Datensatzes auch iterativ ein mehrfaches Berechnen und Modifizieren von Daten des Digitaler-Doppelgänger-Datensatzes unter Berücksichtigung der Kunden- und/oder produktionsspezifische Daten umfassen.

Unter kundenspezifischen Konfigurierungsdaten können dabei Vorgaben verstanden werden, welche Einzelfall-spezifisch vom Kunden zum Beispiel beim Ordern der Personentransportanlage vorgegeben werden. Die kundenspezifischen Konfigurierungsdaten beziehen sich dabei typischerweise auf eine einzelne zu fertigende Personentransportanlage. Beispielsweise können die kundenspezifischen Konfigurierungsdaten vorherrschende räumliche Bedingungen am Einbauort, Schnittstelleninformationen zum Anbau an tragende Strukturen eines Bauwerks, etc. umfassen. Anders ausgedrückt können die kundenspezifischen Konfigurierungsdaten zum Beispiel angeben, welche Länge die Personentransportanlage haben soll, welcher Höhenunterschied überwunden werden soll, in welcher Weise die Personentransportanlage an tragende Strukturen innerhalb des Gebäudes angebunden werden soll, und dergleichen mehr. Kundenspezifische Konfigurierungsdaten können auch Wünsche des Kunden hinsichtlich Funktionalität, Förderkapazität, Optik, etc. umfassen. Die Daten des Digitaler-Doppelgänger-Datensatzes können beispielsweise als CAD-Datensatz vorliegen, welcher unter anderem als charakterisierende Eigenschaften geometrische Abmessungen und/oder andere charakterisierende Eigenschaften der die Personentransportanlage bildenden Bauteile wiedergibt.

Die produktionsspezifischen Daten beziehen sich typischerweise auf Eigenschaften oder Vorgaben innerhalb einer Fertigungsfabrik oder Fertigungslinie, in der die Personentransportanlage gefertigt werden soll. Beispielsweise können, zum Beispiel je nachdem in welchem Land oder an welchem Ort eine Fertigungsfabrik steht, in der Fertigungsfabrik verschiedene Bedingungen herrschen und/oder Vorgaben einzuhalten sein. Beispielsweise können in manchen Fertigungsfabriken bestimmte Materialien, Rohstoffe, Rohbauteile oder Ähnliches nicht verfügbar sein oder nicht verarbeitet werden. In manchen Fertigungsfabriken können Maschinen eingesetzt werden, die in anderen Fertigungsfabriken fehlen. Manche Fertigungsfabriken unterliegen aufgrund ihres Layouts Restriktionen hinsichtlich der darin zu fertigenden Personentransportanlagen bzw. Komponenten derselben. Manche Fertigungsfabriken ermöglichen einen hohen Grad an automatisierter Fertigung, wohingegen andere Fertigungsfabriken beispielsweise aufgrund niedriger Lohnkosten eher manuelle Fertigung einsetzen können. Es können noch eine Vielzahl weiterer Bedingungen und/oder Vorgaben existieren, bezüglich derer sich Fertigungsumgebungen unterscheiden können. All diese produktionsspezifischen Daten müssen typischerweise beim Planen bzw. Kommissionieren einer Personentransportanlage berücksichtigt werden, da von ihnen abhängig sein kann, in welcher Weise eine Personentransportanlage tatsächlich gebaut werden kann. Gegebenenfalls kann es erforderlich sein, den anfänglich erstellten Digitaler-Doppelgänger-Datensatz, welcher lediglich die kundenspezifischen Konfigurierungsdaten berücksichtigt hat, grundlegend zu modifizieren, um den produktionsspezifische Daten Rechnung tragen zu können.

Vorzugsweise werden bereits beim Erstellen des Digitaler-Doppelgänger-Datensatzes statische und/oder dynamische Simulationen durchgeführt und der Kommissionierungs-Digitaler-Doppelgänger-Datensatz wird unter Berücksichtigung von Ergebnissen der Simulationen erstellt. Eine dieser dynamischen Simulationen kann beispielsweise ein Anfahrverhalten bei einer Fahrtreppe sein. Hierbei werden vom Stillstand bis zur Nenngeschwindigkeit alle Friktionskräfte sowie Spiele und die vom Antriebsmotor abhängigen Eigenschaften simuliert. Mit diesen Simulationen können kollisionskritische Stellen überprüft, sowie die auf die einzelnen Bauteile beziehungsweise Bauteilmodell-Datensätze einwirkenden dynamischen Kräfte während des Anfahrens ermittelt werden.

Mit anderen Worten können zum Erstellen des Digitaler-Doppelgänger-Datensatzes, welcher unter Berücksichtigung der kundenspezifischen Konfigurierungsdaten die Grundlage des Kommissionierungs- Digitaler-Doppelgänger-Datensatzes bilden, Simulationen durchgeführt werden, mit denen statische und/oder dynamische Eigenschaften der kommissionierten Personentransportanlage simuliert werden. Simulationen können beispielsweise in einem Computersystem durchgeführt werden.

Statische Simulationen analysieren hierbei beispielsweise ein statisches Zusammenwirken mehrerer zusammengebauter Bauteile. Mithilfe statischer Simulationen kann beispielsweise analysiert werden, ob es beim Zusammenbau von mehreren vordefinierten Bauteilen oder basierend auf Bauteilmodell- Datensätzen fallgerecht spezifizierter Bauteile zu Komplikationen kommen kann, beispielsweise, da jedes der Bauteile mit gewissen Fertigungstoleranzen gefertigt wird, sodass es bei ungünstiger Summierung von Fertigungstoleranzen zu Problemen kommen kann.

Dynamische Simulationen analysieren beispielsweise ein dynamisches Verhalten von Bauteilen beim Betrieb der zusammengebauten Personentransportanlage. Mithilfe dynamischer Simulationen kann beispielsweise analysiert werden, ob bewegliche Bauteile, insbesondere die umlaufend angeordneten Bauteile innerhalb einer Personentransportanlage in einer gewünschten Weise verlagert werden können oder ob beispielsweise Kollisionen zwischen relativ zu einander beweglichen Bauteilen drohen.

Aus den vorangehenden Ausführungen ist zu entnehmen, dass im Kommissionierungs-Digitaler-Doppelgänger-Datensatz zunächst lediglich Soll-Daten abgelegt sind, welche auf den Daten basieren, die beim Planen bzw. Kommissionieren der Personentransportanlage ermittelt wurden. Die Soll-Daten können unter anderem erhalten werden, wenn beispielsweise mit computergestützten Kommissionierungstools in Abhängigkeit von kundenspezifischen Konfigurierungsdaten charakterisierende Eigenschaften einer zu fertigenden Personentransportanlage berechnet werden. Beispielsweise können in dem Kommissionierungs-Digitaler-Doppelgänger-Datensatz Daten betreffend Soll-Abmessungen, Soll-Anzahlen, Soll-Materialeigenschaften, Soll-Oberflächenbeschaffenheit etc. von bei der Fertigung der Personentransportanlage zu verwendenden Bauteilen abgelegt sein.

Der Kommissionierungs-Digitaler-Doppelgänger-Datensatz stellt somit ein virtuelles Abbild der Personentransportanlage in ihrer Planungsphase bzw. Kommissionierungsphase dar, das heißt, bevor die Personentransportanlage anhand des Kommissionierungs-Digitaler-Doppelgänger-Datensatzes tatsächlich gefertigt und installiert wird.

Ausgehend von dem Kommissionierungs-Digitaler-Doppelgänger-Datensatz können dann die darin enthaltenen Soll-Daten mit zunehmendem Produktionsfortschritt sukzessive durch Ist-Daten ersetzt werden und dadurch ein Fertigstellungs-Digitaler-Doppelgänger-Datensatz generiert werden. Die Ist-Daten geben dabei charakterisierende Eigenschaften der zunächst nur hinsichtlich ihrer Soll-Konfiguration definierten Bauteile der Personentransportanlage in ihrer tatsächlichen Konfiguration direkt nach dem Zusammenbau der Personentransportanlage und deren Installation im Bauwerk an. Die Ist-Daten können durch manuelles und/oder maschinelles Vermessen der charakterisierenden Eigenschaften der Bauteile ermittelt werden. Hierzu können separate Messvorrichtungen und/oder in Bauteile integrierte oder an Bauteile angeordnete Sensoren eingesetzt werden.

Der Fertigstellungs-Digitaler-Doppelgänger-Datensatz stellt somit ein virtuelles Abbild der Personentransportanlage direkt nach ihrer Fertigstellung, das heißt nach dem Zusammenbau der Bauteile und der Installation im Bauwerk, dar.

Bei der Inbetriebnahme der physischen Personentransportanlage wird deren Fertigstellungs-Digitaler-Doppelgänger-Datensatz mit den hierbei anfallenden Betriebsdaten und Betriebseinstellungsdaten zum ADDD ergänzt. Während des nachfolgenden Betriebs der Personentransportanlage wird der ADDD kontinuierlich oder in geeigneten Zeitabständen aktualisiert. Die in dem ADDD anfänglich abgelegten Daten werden hierzu während des Betriebs der Personentransportanlage dahingehend modifiziert, dass beobachtete Veränderungen in den charakterisierenden Eigenschaften der die Personentransportanlage bildenden Bauteile berücksichtigt werden.

Hierzu kann in der Personentransportanlage eine Erfassungseinrichtung mit Sensoren als Messeinrichtungen vorgesehen sein, mithilfe derer die zu beobachtenden charakterisierenden Eigenschaften überwacht werden können. Solche Sensoren können beispielsweise geometrische Abmessungen einzelner oder mehrerer Bauteile überwachen. Alternativ oder ergänzend können Sensoren zwischen Bauteilen wirkende Kräfte, an Bauteilen herrschende Temperaturen, innerhalb von Bauteilen oder zwischen Bauteilen wirkende mechanische Spannungen, an Bauteilen herrschende elektrische und/oder magnetische Felder und vieles mehr messen. Da insbesondere die umlaufend angeordneten physischen Bauteile einer Fahrtreppe oder eines Fahrsteiges, wie das Stufenband oder Palettenband, der Handlauf oder die Antriebskette dem Verschleiß während des Betriebes unterworfen sind, werden erfindungsgemäss für die Erfassung der charakterisierenden Eigenschaften insbesondere dieser Bauteile geeignete Sensoren vorgesehen.

Über die Zeit hinweg auftretende Änderungen bei den von den Sensoren gelieferten Messwerten deuten auf Änderungen bei den beobachteten charakterisierenden Eigenschaften hin, woraufhin die in dem ADDD enthaltenen Daten entsprechend modifiziert werden können. Der auf diese Weise modifizierte ADDD stellt somit ein virtuelles Abbild der Personentransportanlage während des Betriebs derselben und unter Berücksichtigung beispielsweise verschleißbedingter Änderungen im Vergleich zu den ursprünglich direkt nach der Fertigstellung gemessenen charakterisierenden Eigenschaften dar und kann somit als ADDD zum kontinuierlichen bzw. wiederholten Überwachen der Eigenschaften der Personentransportanlage verwendet werden.

Logischerweise müssen nicht zwingend alle als Soll-Daten vorhandene, charakterisierende Eigenschaften eines Bauteils durch Ist-Daten des Bauteils aktualisiert werden. Demzufolge sind die charakterisierenden Eigenschaften der meisten Bauteile eines Fertigstellungs-Digitaler-Doppelgänger-Datensatzes und des daraus entstandenen ADDD durch eine Mischung von Soll-Daten und Ist-Daten charakterisiert.

Konkrete Ausgestaltungen, wie ein ADDD für eine Fahrtreppe bzw. einen Fahrsteig erstellt werden kann und wie darauf basierend der Zustand der Fahrtreppe bzw. des Fahrsteigs überwacht werden können, werden weiter unten mit Bezug auf bevorzugte Ausführungsformen dargelegt.

Ausführungsformen des hierin vorgestellten Verfahrens zum Überwachen des Zustands einer Personentransportanlage können mithilfe einer hierfür speziell konfigurierten Vorrichtung durchgeführt werden. Die Vorrichtung kann einen oder mehrere Computer umfassen. Insbesondere kann die Vorrichtung aus einem Computernetzwerk gebildet sein, welches Daten in Form einer Datenwolke (Cloud) verarbeitet. Die Vorrichtung kann hierfür über einen Speicher verfügen, in dem die Daten des ADDD gespeichert werden können, beispielsweise in elektronischer oder magnetischer Form. Die Vorrichtung kann ferner über Datenverarbeitungsmöglichkeiten verfügen. Beispielsweise kann die Vorrichtung einen Prozessor aufweisen, mithilfe dessen Daten des ADDD verarbeitet werden können. Die Vorrichtung kann ferner über Schnittstellen verfügen, über die Daten in die Vorrichtung eingegeben und/oder aus der Vorrichtung ausgegeben werden können. Insbesondere kann die Vorrichtung eine Erfassungseinrichtung mit Sensoren aufweisen, die an oder in der Personentransportanlage angeordnet sind und mithilfe derer charakterisierende Eigenschaften von Bauteilen der Personentransportanlage gemessen werden können. Die Vorrichtung kann prinzipiell Teil der Personentransportanlage sein.

Vorzugsweise ist die Vorrichtung jedoch nicht in der Personentransportanlage angeordnet, sondern entfernt zu dieser, beispielsweise in einem entfernten Kontrollzentrum, von dem aus der Zustand der Personentransportanlage überwacht werden soll. Die Vorrichtung kann auch räumlich verteilt implementiert sein, beispielsweise wenn Daten über mehrere Computer verteilt in einer Datenwolke verarbeitet werden.

Insbesondere kann die Vorrichtung programmierbar sein, das heißt durch ein geeignet programmiertes Computerprogrammprodukt dazu veranlasst werden, das erfindungsgemäße Verfahren auszuführen oder zu steuern. Das Computerprogrammprodukt kann Anweisungen oder Code enthalten, welche beispielsweise den Prozessor der Vorrichtung dazu veranlassen, Daten des Digitaler-Doppelgänger-Datensatzes abzuspeichern, auszulesen, zu verarbeiten, zu modifizieren, etc. Das Computerprogrammprodukt kann in einer beliebigen Computersprache verfasst sein.

Das Computerprogrammprodukt kann auf einen beliebigen computerlesbaren Medium gespeichert sein, beispielsweise einem Flash-Speicher, einer CD, einer DVD, RAM, ROM, PROM, EPROM, etc. Das Computerprogrammprodukt und/oder die damit zu verarbeitenden Daten können auch auf einem Server oder mehreren Servern gespeichert sein, beispielsweise in einer Datenwolke, von wo aus sie über ein Netz, beispielsweise das Internet, heruntergeladen werden können.

Abschließend wird darauf hingewiesen, dass einige der möglichen Merkmale und Vorteile der Erfindung hierin mit Bezug auf unterschiedliche Ausführungsformen sowohl des vorgeschlagenen Verfahrens als auch der entsprechend ausgebildeten Vorrichtung zum Überwachen von Eigenschaften einer Personentransportanlage beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Figur 1 zeigt eine erfindungsgemäße Vorrichtung, aufweisend eine Erfassungseinrichtung, die in einer physischen Personentransportanlage angeordnet ist, sowie ein die physische Personentransportanlage abbildender Aktualisierter-Digitaler-Doppelgänger-Datensatz (ADDD), der in einer Datenwolke (Cloud) gespeichert ist und mit welcher Vorrichtung ein erfindungsgemäßes Verfahren durchgeführt werden kann.

Figur 2 zeigt die Fahrtreppe aus der Figur 1 in geschnittener Seitenansicht.

Die Figuren 3A bis 3C zeigen in vergrößerter Darstellung die in der Figur 2 angegebenen, verschiedenen Bereiche, wobei in jedem dieser Bereiche Teile einer Erfassungseinrichtung der erfindungsgemässen Vorrichtung angeordnet sind.

Figur 4 veranschaulicht ein Erstellen eines Aktualisierter-Digitaler-Doppelgänger-Datensatzes (ADDD) und die Produktion einer physischen Personentransportanlage sowie deren Inbetriebnahme und die kontinuierliche Aktualisierung des ADDD von der Konfigurierung bis zum Betrieb der physischen Personentransportanlage.

Die Figuren sind lediglich schematisch und nicht maßstabsgetreu. Gleiche Bezugszeichen bezeichnen in den verschiedenen Figuren gleiche oder gleichwirkende Merkmale.

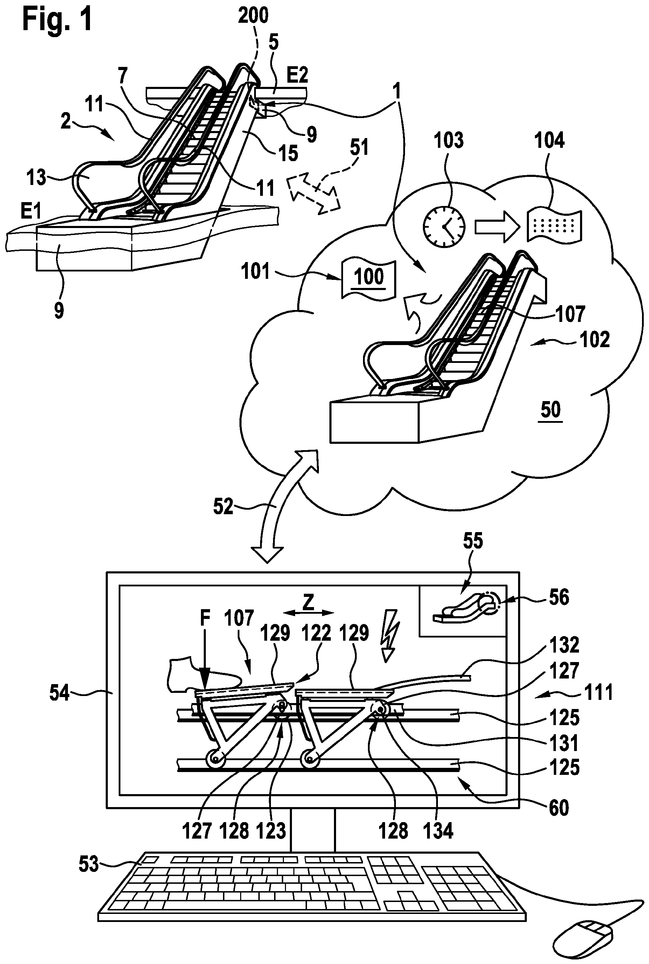

Figur 1 zeigt eine erfindungsgemäße Vorrichtung 1, umfassend eine Erfassungseinrichtung 200, die in einer physischen Personentransportanlage 2 angeordnet ist, sowie einen Aktualisierter-Digitaler-Doppelgänger-Datensatz (ADDD) 102 der physischen Personentransportanlage 2, der in einer Datenwolke (Cloud) 50 gespeichert ist, wobei mittels der Vorrichtung 1 ein erfindungsgemäßes Verfahren 100 durchgeführt werden kann.

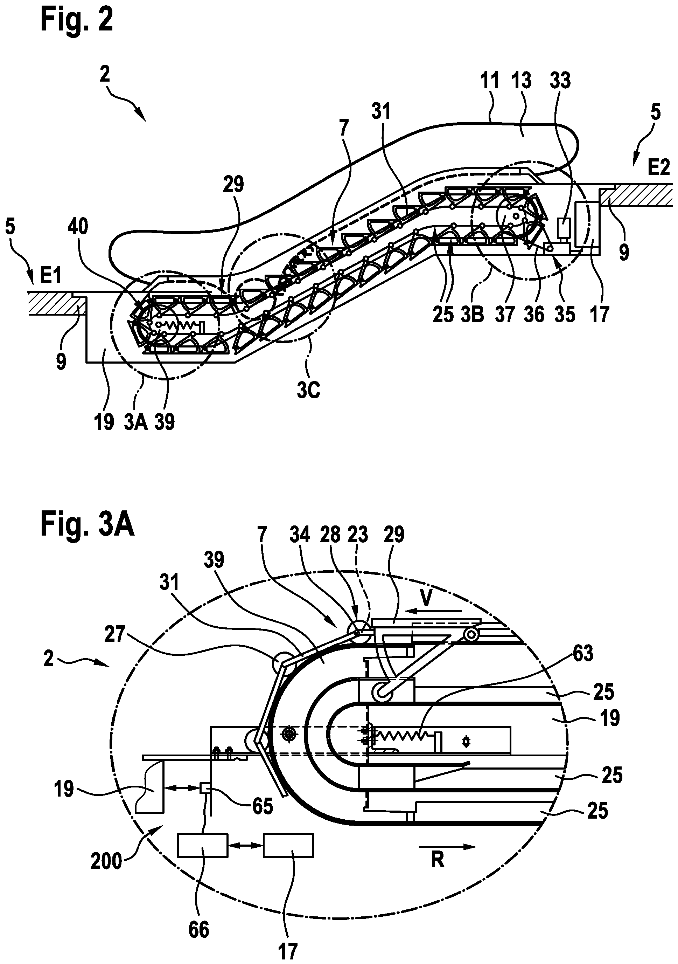

Die in den Figuren 1 und 2 (nachfolgend gemeinsam beschrieben) dargestellte physische Personentransportanlage 2 ist in Form einer Fahrtreppe ausgestaltet und verbindet in einem Bauwerk 5 auf unterschiedlichen Höhen gelegene und horizontal voneinander beabstandeten Ebenen E1 und E2. Mittels der physischen Personentransportanlage 2 können Passagiere zwischen den beiden Ebenen E1 und E2 befördert werden. Die physische Personentransportanlage 2 liegt an ihren gegenüberliegenden Enden auf Auflagestellen 9 des Bauwerks 5 auf.

Die physische Personentransportanlage 2 umfasst ferner ein in der Figur 2 nur in seinen Umrissen dargestelltes Tragwerk 19, welches sämtliche weiteren Bauteile der physischen Personentransportanlage 2 lasttragend aufnimmt. Dazu gehören statisch angeordnete physische Bauteile wie Führungsschienen 25, eine Antriebsmaschine 33, ein Übertragungsstrang 35, eine Steuerung 17, von der Antriebsmaschine 33 über den Übertragungsstrang 35 angetriebene Antriebskettenräder 37 sowie ein Umlenkbogen 39. Die physische Personentransportanlage 2 umfasst ferner Balustraden 13, die zu ihren beiden Längsseiten oberhalb des Tragwerks 19 an diesem angeordnet sind. Der Umlenkbogen 39 ist Teil einer Förderkettenspannvorrichtung 40.

Des Weiteren weist die physische Personentransportanlage 2 auch umlaufend angeordnete Bauteile 7, 11, 31, 36 auf, die naturgemäß während des Betriebes Verschleißerscheinungen unterworfen sind. Es sind dies insbesondere ein Stufenband 7, welches zwischen den Antriebskettenrädern 37 und den Umlenkbogen 39 umlaufend angeordnet ist, zwei Handläufe 11 beziehungsweise Handlaufriemen, die an den Balustraden 13 umlaufend angeordnet sind sowie eine Antriebskette 36, die als Übertragungsglied Teil des Übertragungsstranges 35 ist. Das Stufenband 7 umfasst Fahrtreppenstufen 29 und Förderketten 31 sowie noch eine Vielzahl weitere Bauteile wie Stufenrollen, Kettenrollen, Stufenachsen und dergleichen mehr.

Alternativ kann die physische Personentransportanlage 2 auch als Fahrsteig (nicht dargestellt) ausgestaltet sein, der hinsichtlich vieler seiner Bauteile ähnlich oder gleich wie die als Fahrtreppe dargestellte physische Personentransportanlage 2 aufgebaut ist.

Wie die Figur 1 zeigt, sind viele Bauteile der physischen Personentransportanlage 2 wie das Fachwerk 19, die Führungsschienen 25, der gesamte Antriebsstrang 35, die Antriebskettenräder 37 und Umlenkbogen 39, die elektrische Ausrüstung wie Strom- und Signalleitungen, Sensoren und die Steuerung 17 durch Verkleidungsbauteile 15 abgedeckt und geschützt und daher von außen nicht einsehbar. Auch vom Stufenband 7 sind in der Figur 1 nur ein Teil der Fahrtreppenstufen 29 des von Passagieren betretbaren Vorlaufs sichtbar.

Die Vorrichtung 1 umfasst gemäss der Figur 1 zudem einen Aktualisierter-Digitaler-Doppelgänger-Datensatz 102, der nachfolgend der besseren Lesbarkeit wegen abgekürzt als ADDD 102 bezeichnet wird. Der ADDD 102 ist ein möglichst umfassendes, dem aktuellen physischen Zustand der physische Personentransportanlage 2 nachgeführtes virtuelles Abbild und stellt daher eine der physischen Personentransportanlage 2 zugeordnete, virtuelle Personentransportanlage dar. Das heißt, dass der ADDD 102 nicht nur ein virtuelles Hüllenmodell der physischen Personentransportanlage 2 ist, das in etwa dessen Abmaße repräsentiert, sondern es ist jedes einzelne physische Bauteil vom Handlauf 11 bis zur letzten Schraube mit möglichst allen seinen charakterisierenden Eigenschaften auch in digitalisierter Form im ADDD 102 vorhanden und abgebildet.

Erfindungsgemäss können charakterisierende Eigenschaften von Bauteilen geometrische Abmessungen der Bauteile wie beispielsweise eine Länge, eine Breite, eine Höhe, ein Querschnitt, Radien, Verrundungen, etc. sein. Auch die Oberflächenbeschaffenheit der Bauteile wie beispielsweise Rauigkeiten, Texturen, Beschichtungen, Farben, Reflektivitäten, etc. gehören zu den charakterisierenden Eigenschaften. Ferner können auch Materialwerte wie beispielsweise das Elastizitätsmodul, der Biegewechselfestigkeitswert, die Härte, der Kerbschlagzähigkeitswert, der Zugfestigkeitswert, etc. als charakterisierende Eigenschaften des jeweiligen Bauteils hinterlegt sein. Es handelt sich hierbei nicht um theoretische Eigenschaften (Soll-Daten), wie sie beispielsweise auf einer Fertigungszeichnung zu finden sind, sondern um tatsächlich am physischen Bauteil ermittelte charakterisierende Eigenschaften (Ist-Daten). Auch montagerelevante Angaben wie beispielsweise das tatsächlich aufgebrachte Anzugsdrehmoment einer Schraube und damit deren Vorspannkraft sind vorzugsweise dem jeweiligen Bauteil zugeordnet.

Die Vorrichtung 1 kann beispielsweise ein oder mehrere Computersysteme 111 umfassen. Insbesondere kann die Vorrichtung 1 ein Computernetzwerk umfassen, welches Daten in Form einer Datenwolke 50 (Cloud) speichert und verarbeitet. Die Vorrichtung 1 kann hierfür über einen Speicher, oder wie symbolisch dargestellt, über Speicherressourcen in der Datenwolke 50 verfügen, in dem die Daten des ADDD 102 (symbolisch als dreidimensionales Abbild der physischen Personentransportanlage 2 dargestellt) gespeichert werden können, beispielsweise in elektronischer oder magnetischer Form.

Das bedeutet, dass der ADDD 102 an einem beliebigen Speicherort abgespeichert sein kann.

Die Vorrichtung 1 kann ferner über Datenverarbeitungsmöglichkeiten verfügen. Beispielsweise kann die Vorrichtung 1 einen Prozessor aufweisen, mithilfe dessen Daten des ADDD 102 verarbeitet werden können. Die Vorrichtung 1 kann ferner über Schnittstellen 53, 54 verfügen, über die Daten in die Vorrichtung 1 eingegeben und/oder aus der Vorrichtung 1 ausgegeben werden können. Insbesondere kann die Vorrichtung 1 interne Schnittstellen 51, 52 aufweisen, wobei die Schnittstelle 51 zwischen dem ADDD 102 und der physischen Personentransportanlage 2 eine Kommunikation zu Sensoren der Erfassungseinrichtung 200 ermöglicht, die an oder in der Personentransportanlage 2 angeordnet sind und mithilfe derer direkt oder indirekt charakterisierende Eigenschaften von Bauteilen der Personentransportanlage 2 gemessen und ermittelt werden können.

Die Vorrichtung 1 kann prinzipiell gesamthaft in der physischen Personentransportanlage 2, verwirklicht sein, wobei deren ADDD 102 beispielsweise in deren Steuerung 17 gespeichert ist und dessen Daten durch die Steuerung 17 verarbeitet werden kann. Vorzugsweise ist der ADDD 102 der Vorrichtung 1 jedoch nicht in der physischen Personentransportanlage 2 gespeichert, sondern entfernt zu dieser, beispielsweise in einem entfernten Kontrollzentrum, von dem aus der Zustand der physischen Personentransportanlage 2 überwacht werden soll oder in der von überall her beispielsweise über eine Internetverbindung erreichbaren Datenwolke 50. Die Vorrichtung 1 kann auch räumlich verteilt implementiert sein, beispielsweise wenn Daten des ADDD 102 über mehrere Computer verteilt in der Datenwolke 50 verarbeitet werden.

Insbesondere kann die Vorrichtung 1 programmierbar sein, das heißt durch ein geeignet programmiertes, den ADDD 102 umfassendes Computerprogrammprodukt 101 kann diese dazu veranlasst werden, das erfindungsgemäße Verfahren 100 auszuführen oder zu steuern. Das Computerprogrammprodukt 101 kann Anweisungen oder Code enthalten, welche beispielsweise einen Prozessor der Vorrichtung 1 dazu veranlassen, gemäss dem implementierten Verfahren 100 Daten des ADDD 102 abzuspeichern, auszulesen, zu verarbeiten, zu modifizieren, etc. Das Computerprogrammprodukt 101 kann in einer beliebigen Computersprache verfasst sein.

Das Computerprogrammprodukt 101 kann auf einem beliebigen computerlesbaren Medium gespeichert sein, beispielsweise einem Flash-Speicher, einer CD, einer DVD, RAM, ROM, PROM, EPROM, etc. Das Computerprogrammprodukt 101 und/oder die damit zu verarbeitenden Daten können auch auf einem Server oder mehreren Servern gespeichert sein, beispielsweise in der Datenwolke 50, von wo aus sie über ein Netz, beispielsweise das Internet, heruntergeladen werden können.

Aufgrund der im ADDD 102 vorhandenen Daten, lässt sich dieser beziehungsweise lassen sich dessen virtuellen Bauteile durch ein Ausführen des Computerprogrammproduktes 101 in einem Computersystem 111 aufrufen und als eine dreidimensionale, virtuelle Personentransportanlage darstellen. Diese kann virtuell mittels Zoomfunktionen und Bewegungsfunktionen "durchwandert" und erkundet werden. Hierbei sind auch Bewegungsabläufe, Kollisionssimulationen, statische und dynamische Festigkeitsanalysen unter Zuhilfenahme der Finiten-Elemente-Methode und interaktive Abfragen zu aktuellen charakterisierenden Eigenschaften einzelner virtueller Bauteile und Bauteilgruppen möglich. Das heißt, dass beispielsweise aus dem ADDD 102 das virtuelle umlaufend angeordnete Stufenband 107, welches das Pendant des physischen Stufenbandes 7 darstellt, ausgewählt und dessen aktualisierte, charakterisierende Eigenschaft wie beispielsweise eine verschleißbedingte Längenänderung im Vergleich zu seinem Neuzustand abgefragt werden kann.

Damit mittels des ADDD 102 aussagekräftige Zustandsanalysen und Zustandssimulationen gemacht werden können, müssen insbesondere charakterisierende Eigenschaften von verschleißbehafteten Bauteilen in den virtuellen Bauteil-Datensätzen des ADDD 102 kontinuierlich oder periodisch aktualisiert werden. Diese Aktualisierungsabfragen können automatisiert durch das im Computerprogrammprodukt 101 implementierte Verfahren 100 initialisiert werden. Sie können aber auch von "Außen" das heißt über eine Eingabe zum Beispiel über die als Tastatur dargestellte Schnittstelle 53 des Computersystems 111 initialisiert werden. Die eigentliche Aktualisierung der charakterisierenden Eigenschaften erfolgt über die Schnittstelle 51 zwischen der physischen Personentransportanlage 2 und dem ADDD 102 beziehungsweise dem laufenden Computerprogramm (Verfahren 100) des Computerprogrammproduktes 101. Hierbei werden Messwerte von entsprechenden Sensoren oder Sensorsystemen der Erfassungseinrichtung 200 (siehe auch Figuren 3A bis 3C) abgefragt und diese Messwerte gegebenenfalls weiterverarbeitet, um zu den charakterisierenden Eigenschaften der vom Messwert beeinflussten beziehungsweise betroffenen Bauteile zu gelangen. Die Messwerte sowie die sich daraus ergebenden charakterisierenden Eigenschaften können in einem Logfile 104 abgelegt werden. Um diese Einträge historisch zu ordnen, können sie mit einer Zeitinformation 103 im Logfile 104 abgespeichert werden. Die Erfassung von Messwerten sowie deren Weiterverarbeitung, um zu charakterisierenden Eigenschaften der vom Messwert beeinflussten beziehungsweise betroffenen Bauteile zu gelangen, wird weiter unten in Zusammenhang mit den Figuren 3A bis 3C näher erläutert.

Wie in der Figur 1 schematisch dargestellt, kann ein Benutzer, beispielsweise ein Techniker, eine Abfrage über den Zustand der physischen Personentransportanlage 2 tätigen, indem er über das Computersystem 111 das Computerprogramm 100 des Computerprogrammproduktes 101 startet beziehungsweise darauf zugreift. Das Computersystem 111 kann fester Bestandteil der Vorrichtung 1 sein, es kann aber auch nur eine temporäre Zugehörigkeit annehmen, während mit ihm über die Schnittstelle 52 auf Daten des ADDD 102 zugegriffen wird.

Im vorliegenden Ausführungsbeispiel der Figur 1 hat der Techniker über Zoomfunktionen einen Bereich 60 des ADDD 102 ausgewählt. Hierbei kann auf dem als Datenausgabe dienenden Bildschirm 54 eine kleine Navigationsgrafik 55 dargestellt sein, auf der mittels eines Pointers 56 der ausgewählte Bereich 60 angezeigt wird. Beim ausgewählten Bereich 60 handelt es sich um den in der Ebene E2 vorhandenen, virtuellen Zutrittsbereich, bei welchem die virtuellen Fahrtreppenstufen 129 unter die dort angeordnete, virtuelle Kammplatte 132 einlaufen. Aufgrund des gezoomten Bereiches 60 sind lediglich die virtuellen Führungsschienen 125, die virtuelle Kammplatte 132 sowie zwei virtuelle Fahrtreppenstufen 129 des Stufenbandes 107 zu sehen.

Da das physische Stufenband 7 schon einige Betriebsstunden aufweist, weisen die Gelenkstellen von dessen Förderketten infolge der stetigen Relativbewegungen zwischen den Kettengliedern unter Last einen gewissen Verschleiß auf. Dieser Verschleiß führt zu einer Längung des Stufenbandes 7, wodurch der Spalt zwischen zwei Fahrtreppenstufen 29 geringfügig grösser werden kann. Die verschleißbedingte Längung des Stufenbandes 7 kann wie weiter unten in Zusammenhang mit der Figur 3A gemessen und dieser Messwert auf den ADDD 102 übertragen werden, indem für die davon betroffenen virtuellen Bauteile die entsprechenden charakterisierenden Eigenschaften aktualisiert werden. Wenn der Messwert mit all seinen Auswirkungen auf die davon betroffenen Bauteile auf den ADDD 102 übertragen ist, weisen auch die Bauteile des virtuellen Stufenbandes 107 wie die Gelenkstellen 128 von dessen Förderketten 131 dieselben verschleißbedingten Veränderungen auf, so dass auch im ADDD 102 der Spalt zwischen zwei virtuellen Fahrtreppenstufen 129 geringfügig grösser wird.

Konkret bedeutet dies, dass die als Messwert erfasste Verlängerung der Förderkette 131 auf die Anzahl Gelenkstellen 128 der Förderkette 131 aufgeteilt wird, so dass pro Gelenkstelle 128 die Veränderung des Spiels festgestellt werden kann. Dieses Spiel wird beispielsweise je nach Festigkeitseigenschaften des Kettenbolzens 134 und der Kettenbuchse 123 der Gelenkstelle 28 auf den Innendurchmesser der Kettenbuchse 123 und den Außendurchmesser des Kettenbolzens 134 aufgeteilt. Demzufolge ändern sich die charakterisierende Eigenschaft "Innendurchmesser" der Kettenbuchse 123 und die charakterisierende Eigenschaft "Außendurchmesser" des Kettenbolzens 134 einer jeden Gelenkstelle 128 der Förderketten 131.

Hieraus können beispielsweise Festigkeitsberechnungen für die Kettenbolzen 134 durchgeführt werden, so dass im Rahmen der durchzuführenden Analyse nach dem erfindungsgemässen Verfahren 100 auch der aktuelle Sicherheitsfaktor der virtuellen Förderkette 131 und damit der physischen Förderkette 31 gegen Bruch ermittelt werden kann.

Der vorangehend beschriebene Verschleiß führt aber nicht nur zu einer Schwächung des Kettenbolzens 134, sondern auch zu einem größeren Spiel innerhalb der Gelenkstellen 128. Mittels dynamischer Simulationen am ADDD 102 können die Auswirkungen dieses vergrößerten Spiels beurteilt werden. Bei diesen Simulationen kann sich beispielsweise die Fahrtreppenstufe 129 innerhalb dieses Spiels orthogonal (in der Figur 1 extrem übertrieben dargestellt) zur vorgesehenen Bewegungsrichtung Z bewegen und bei einer für diesen Fall ungünstigen Belastung F etwas mehr verkippen, als dies das normale Spiel zwischen den Kettenrollen 127 und der Führungsschiene 125 zulassen würde. Wenn das Spiel zu groß und das Verkippen zu stark ist, kann die führende Kante 122 der Fahrtreppenstufe 129 mit der Kammplatte 132 kollidieren.

Wie bereits weiter oben erwähnt, können die von der Erfassungseinrichtung übermittelten Messwerte mit einer Zeitinformation 103 versehen und in einem Logfile 104 abgespeichert werden. Selbstverständlich kann dasselbe auch mit den charakterisierenden Eigenschaften der virtuellen Bauteile des ADDD 102 gemacht werden, so dass auch bei den charakterisierenden Eigenschaften eine rückverfolgbare Historie vorhanden ist und auf der Basis dieser Historie mittels bekannter analytischer Methoden ein Veränderungstrend der entsprechenden charakterisierenden Eigenschaften berechnet werden kann. Durch eine geeignete Extrapolation auf Basis der Historie kann der Zeitpunkt eines möglichen Schadensereignisses ermittelt und präventive Wartungsarbeiten vor diesem Zeitpunkt geplant und durchgeführt werden. Im vorangehend beschriebenen Beispiel kann die verbleibende Zeit über die Durchmesserabnahme des Kettenbolzens 134 infolge des Verschleißes extrapoliert werden, bis der vorgeschriebene Sicherheitsfaktor des Kettenbolzens 134 unterschritten wird. Ebenso ist ein möglicher Zeitpunkt für eine Stufenkollision mit der Kammplatte 132 durch die vorangehend beschriebene dynamische Simulation ermittelbar, wobei der frühere mögliche Zeitpunkt der beiden Ereignisse für den Wartungszeitpunkt bestimmend ist.

Um die dabei anfallende Datenmenge zu begrenzen, kann eine rückverfolgbare Historie auch nur mit einigen ausgewählten charakterisierenden Eigenschaften einiger ausgewählter, insbesondere Verschleißerscheinungen unterworfener Bauteile erstellt werden.

Aus Gründen der Fertigungstoleranzen der Bauteile und durch die bei der Herstellung und/oder bei der Inbetriebnahme und/oder bei einer vorangehenden Wartung gemachten Einstellungen weist nicht jede physische Personentransportanlage 2 die genau gleichen geometrischen Verhältnisse bezüglich der Bauteile und deren Einbaulage auf. Genaugenommen ist jede physische Personentransportanlage in der Gesamtheit der charakterisierenden Eigenschaften ihrer Bauteile einzigartig und dementsprechend unterscheiden sich auch alle ADDD 102 (wenn auch nur geringfügig) voneinander. Im beispielhaft ausgewählten Bereich 60 führt dies dazu, dass eine bestimmte Verschleißerscheinung (quantitativ gleich, an einem bestimmten Bauteil) bei der einen physischen Personentransportanlage 2 bereits zu einer Kollision von Fahrtreppenstufe 29 und Kammplatte führen kann, während bei einer anderen physischen Personentransportanlage 2 gleicher Auslegung noch lange keine Gefahr einer Kollision besteht. Anhand dieses Beispiels ist leicht erkennbar, dass aufgrund der Analysemöglichkeiten, die der ADDD 102 mit seinen virtuellen Bauteilen bietet, für jedes physische Bauteil einer Personentransportanlage 2 dessen Weiterverwendung, dessen Einjustierung in seinem Umfeld oder dessen Ersatz unter Verwendung des ADDD 102 ermittelt und entsprechende Wartungsarbeiten geplant werden können.

Nachfolgend soll anhand der Figuren 3A bis 3C beispielhaft gezeigt werden, wie verschleißbedingte Veränderungen an umlaufend angeordneten Bauteilen der physischen Personentransportanlage 2 erfasst werden können. Hierzu wurden die in der Figur 2 angegebenen drei Bereiche ausgewählt und in den Figuren 3A bis 3C vergrößert dargestellt, wobei in jedem dieser Bereiche Teile einer Erfassungseinrichtung 200 der erfindungsgemässen Vorrichtung 1 angeordnet sind.

Figur 3 A zeigt den in der Figur 2 dargestellten Umlenkbogen 39 der physischen Personentransportanlage 2, welcher in der ersten Ebene E1 angeordnet ist. Der Umlenkbogen 39 dient der Umlenkung des Stufenbandes 7 von einem Vorlauf V zu einem Rücklauf R.

Der besseren Übersicht wegen ist vom Stufenband 7 nur eine Fahrstufe 29 und ein Teil der Förderkette 31 dargestellt. Der Umlenkbogen 39 ist zudem Teil der Förderkettenspannvorrichtung 40. Hierzu ist dieser in einer horizontalen Linearführung 61 verschiebbar gelagert, so dass eine Verschiebung des Umlenkbogens 39 relativ zu den ortsfest am Tragwerk 19 festgelegten Führungsschienen 25 erfolgen kann. Als Spannmittel dient eine Druckfeder 63, die zwischen dem Tragwerk 19 und dem Umlenkbogen 39 angeordnet ist. Da wo die Förderkette 31 umgelenkt wird, erfolgt eine Schwenkbewegung in deren Gelenkstellen 28. Diese Relativbewegungen verursachen Reibung zwischen einem Kettenbolzen 34 und einer Kettenbuchse 23, welche die Gelenkstelle 28 bilden, und damit zu Materialabtragungen am Kettenbolzen 34 und an der Kettenbuchse 23. Durch diese Verschleißerscheinungen vergrößert sich zunehmend das Spiel in den Gelenkstellen 28 und die Summe des in allen Gelenkstellen 28 zunehmenden Spiels führt zu einer Kettenlängung der Förderkette 31.

Die Kettenlängung führt wiederum zu einer Verschiebung des Umlenkbogens 39 relativ zu den Führungsschienen 25 beziehungsweise zum Tragwerk 19. Diese Verschiebung kann wie dargestellt, beispielsweise mit einem zwischen Umlenkbogen 39 und Tragwerk 19 angeordneten Abstandsmesssensor 65 laufend oder periodisch gemessen werden. Dessen Messwerte werden durch ein geeignetes Übertragungsmittel 66, beispielsweise über einen CAN-Bus oder über eine Bluetooth-Verbindung an die Steuerung 17 der Personentransportanlage 2 übermittelt. Der Abstandsmesssensor 65 sowie das Übertragungsmittel 66 sind Teile der Erfassungseinrichtung 200.

Wie bereits in der Figur 1 dargestellt, kommuniziert die Steuerung 17 über die Schnittstelle 51 mit dem in der Datenwolke 50 installierten ADDD 102, wodurch eine Übermittlung des vom Abstandsmesssensor 65 ermittelten Messwertes erfolgen kann. Im ADDD 102 erfolgt dann aufgrund dieses Messwertes bei den vom Messwert betroffenen Bauteilen eine Aktualisierung ihrer charakterisierenden Eigenschaften. Hierbei kann beispielsweise der Messwert direkt verwendet werden, um die charakterisierende Eigenschaft "horizontale Position" des im ADDD 102 vorhandenen, virtuellen Umlenkbogens zu aktualisieren. Wie bereits weiter oben erklärt, muss zur Aktualisierung des Außendurchmessers des Kettebolzens 34 und des Innendurchmessers der Kettenbuchse 23 deren verschleißbedingt veränderten Durchmesserwerte zuerst berechnet werden, weshalb in Bezug auf diese Bauteile eine indirekte Erfassung von deren charakterisierenden Eigenschaften durch den Abstandssensor 65 vorliegt.

Verschleißbedingt können auch die Kettenrollen 27 eine Durchmesserveränderung erfahren, was eine zusätzliche Verschiebung des Umlenkbogens 39 verursachen kann. Um die Aufteilung auf die verschiedenen charakterisierenden Eigenschaften der betroffenen Bauteile zu präzisieren, müssten gegebenenfalls weitere Sensoren oder andere Erfassungsprinzipien (z.B. optisch) vorgesehen werden.

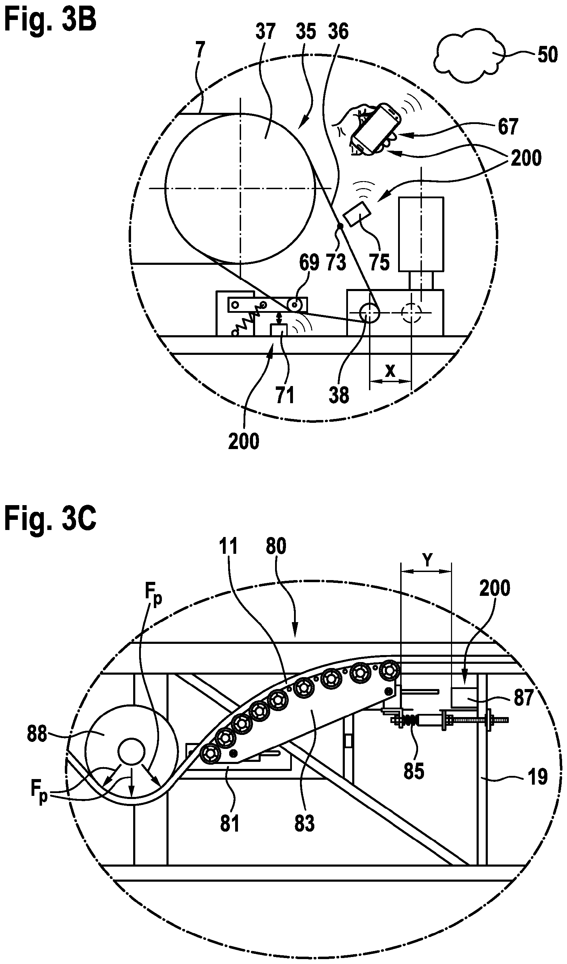

Die Figur 3B zeigt den in der Figur 2 dargestellten Antriebsstrang 35 der physischen Personentransportanlage 2. Dieser ist in der zweiten Ebene E2 angeordnet. Die im Antriebsstrang 35 zwischen dem Antriebskettenrad 37 und einem Getrieberitzel 38 angeordnete Antriebskette 36 ist ebenfalls ein umlaufend angeordnetes Bauteil, das hohe Sicherheitsanforderungen erfüllen muss. Wie bereits in Zusammenhang mit der Förderkette 31 ausführlich beschrieben, sind auch die Gelenkstellen der Antriebskette 36 Verschleisserscheinungen unterworfen, die zu einer Längung der Antriebskette 36 führen. Es gibt verschieden Möglichkeiten, mittels einer, oder zumindest mittels eines Teils einer Erfassungseinrichtung 200, die Längung der Antriebskette 36 und damit eine Veränderung der charakterisierenden Eigenschaften der von diesen Verschleißerscheinungen betroffenen Bauteilen festzustellen und in den ADDD 102 zu übertragen.

Die einfachste Möglichkeit besteht darin, dass ein mit Wartungsarbeiten betrauter Techniker im Rahmen von Revisionsarbeiten die Kettenspannung der Antriebskette 36 überprüft und durch Verschieben des Getrieberitzels 38 beziehungsweise der Motor/Getriebeeinheit relativ zum Antriebskettenrad 37 neu einstellt. Dabei misst er das Verschiebemaß X und gibt dieses in ein mobiles Eingabegerät 67 ein, aus dem er auch seine Wartungsinstruktionen empfängt. Dieses mobile Eingabegerät 67 kommuniziert über die Steuerung 17 der Personentransportanlage 2, oder direkt, mit dem in der Datenwolke 50 verwirklichten ADDD 102. Es können im ADDD 102 auch wartungsrelevante Abfragen hinterlegt sein, die beispielsweise eine Betriebsfreigabe der physischen Personentransportanlage 2 von einer erfolgten Eingabe des Verschiebemaßes X durch den Techniker abhängig machen.

Eine weitere Möglichkeit besteht darin, mittels eines vorspannenden Tastrades 69 beziehungsweise Kettenspannrades, welches in der Kettenschlinge der Antriebskette 36 eingreift, deren Durchhang zu erfassen, indem ein Sensor 71 die Position des Tastrades 69 kontinuierlich oder periodisch abgreift. Aus dieser Position beziehungsweise aus einer Positionsänderung lässt sich unter Berücksichtigung der geometrischen Verhältnisse in diesem Bereich, insbesondere durch den Durchmesser und die Position des Getrieberitzels 38 und den Durchmesser und die Position des Antriebskettenrades 37, die Längung der Antriebskette 36 und damit das Spiel in deren einzelnen Gelenkstellen berechnen. Daraus lassen sich wie am Beispiel der Figur 3A erklärt, wiederum die charakterisierenden Eigenschaften der einzelnen Bauteile der Antriebskette 36 ermitteln. Die Übermittlung der vom Sensor 71 ermittelten Messwerte kann über die Steuerung 17 oder über drahtlose Verbindungen vom Sensor 71 direkt an den ADDD 102 erfolgen. Vorzugsweise wird die vorangehend rudimentär beschriebene Ermittlung der charakterisierenden Eigenschaften der vom Messwert des Sensors 71 betroffenen Bauteile, unter Verwendung des ADDD 102, insbesondere der durch die virtuellen Bauteilmodelle vorhandenen, geometrischen Verhältnisse und Beziehungen, durchgeführt.

Eine wesentlich direktere Messmethode, die Längung der Antriebskette 36 zu messen, besteht darin, an der Antriebskette 36 eine Markierung 73 (Magnet, Farbmarkierung, RFID-Chip, etc.) anzubringen. Während des Umlaufens der Antriebskette 73 wird durch ein geeigneter Sensor 75 (optisch, magnetisch, RFID-Lesegerät, etc.) das Vorbeiziehen der Markierung 73 als Impuls erfasst. Die gemessene Zeit zwischen zwei erfassten Impulsen ergibt in Relation zur Geschwindigkeit der Antriebskette 36 deren effektive Länge. Die Geschwindigkeit der Antriebskette 36 kann aus der von der Steuerung 17 vorgegebenen Geschwindigkeit des Stufenbandes 7 mittels des Übersetzungsverhältnisses errechnet werden.

Aus zwei zeitlich auseinanderliegenden Messungen kann eine Zeitdifferenz ermittelt werden, welche unter Einbeziehung der bei den Messungen herrschenden Geschwindigkeit in die verschleißbedingte Längung der Antriebskette 36 umgerechnet werden kann. Die Übermittlung der vom Sensor 75 ermittelten Messwerte kann über die Steuerung 17 oder über kabellose Verbindungen direkt an den ADDD 102 erfolgen. Vorzugsweise wird die vorangehend rudimentär beschriebene Ermittlung der charakterisierenden Eigenschaften der vom Messwert betroffenen Bauteile unter Verwendung des in der Datenwolke 50 angelegten ADDD 102 durchgeführt und dieser dann entsprechend aktualisiert.

In der Figur 3C ist eine Handlaufspannvorrichtung 80 dargestellt. Diese weist einen mittels Linearführungen 81 am Tragwerk 19 geführten, verschiebbaren Rollenbogen 83 auf. Der Rollenbogen 83 ist gegen das Tragwerk 19 mittels eines Federelementes 85 vorgespannt. Wenn sich nun infolge von Verschleißerscheinungen die endlose Schlinge des Handlaufs 11 dehnt, kompensiert die Handlaufspannvorrichtung 80 diese Längung des Handlaufs 11 durch ein lineares Verschieben des Rollenbogens 83. Mittels eines am Tragwerk 19 befestigten Sensors 87 kann der Abstand Y zum Rollenbogen 83 gemessen werden. Der Sensor 87 kann ebenfalls Teil der Erfassungseinrichtung 200 sein. Der Messwert des Sensors 87 wird auf den ADDD 102 übertragen, daraus werden die charakterisierenden Eigenschaften der von diesem Messwert betroffenen virtuellen Bauteile ermittelt und die betroffenen virtuellen Bauteile des ADDD 102 entsprechend aktualisiert.

Da auch die Federvorspannung des Federelementes 85 bei einer vorgegebenen Einstellung abhängig vom Abstand Y ist, kann aus der vorhandenen Geometrie die Zugkraft im Handlauf 11 beziehungsweise Handlaufriemen berechnet werden. Aus dieser Zugkraft lässt sich dann die Anpresskraft F_{P} und die Kraftübertragung des Handlaufantriebsrades 88 an den Handlauf 11 (Euler-Eytelwein Formel) errechnen. Alle diese Kräfte sind ebenfalls charakterisierende Eigenschaften für diejenigen Bauteile, auf die sie wirken und ersetzen im ADDD 102 die entsprechenden älteren charakterisierenden Eigenschaften seiner virtuellen Bauteile beziehungsweise von deren Bauteilmodell-Datensätzen.

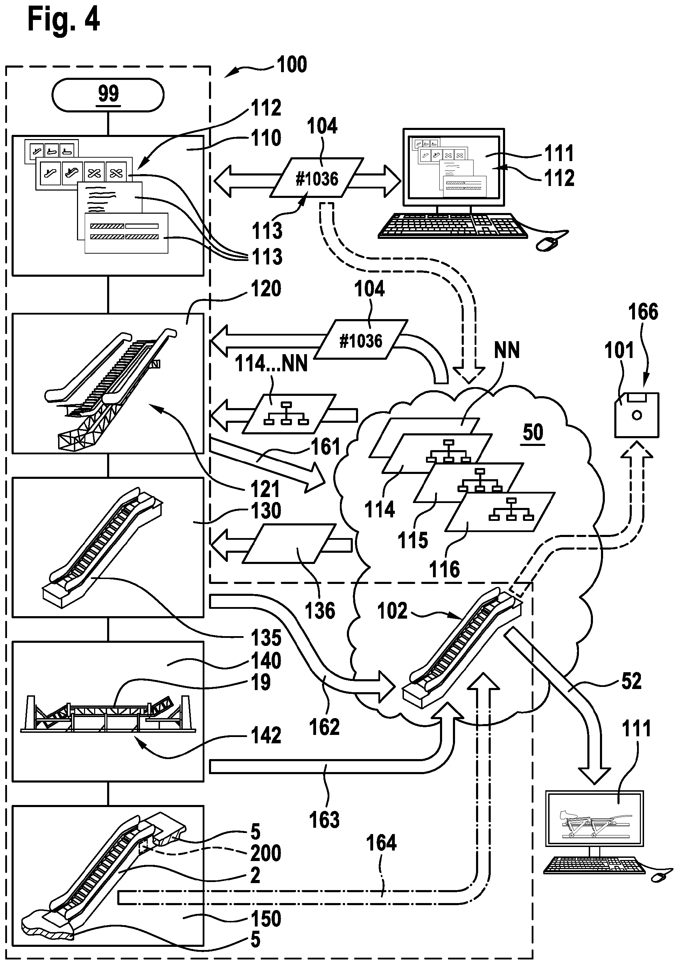

Figur 4 veranschaulicht anhand eines mit zusätzlichen Informationen versehenes Diagramms die wichtigsten Verfahrensschritte des erfindungsgemässen Verfahrens 100 (markiert mittels unterbrochener Linie) zur Erstellung eines ADDD 102, die Produktion einer physischen Personentransportanlage 2 im Rahmen dieser Erstellung sowie die Inbetriebnahme der physischen Personentransportanlage 2 und die kontinuierliche Aktualisierung des ADDD 102. Die hauptsächlichen Verfahrensschritte des Verfahrens 100 sind gegliedert in:
- im ersten Verfahrensschritt 110 eine Erfassung der kundenspezifischen Konfigurierungsdaten 113;
- im zweiten Verfahrensschritt 120 eine Erstellung eines Kommissionierungs-Digitaler-Doppelgänger-Datensatzes unter Einbeziehung von Bauteilmodell-Datensätzen und den kundenspeifischen Konfigurierungsdaten 113;
- im dritten Verfahrensschritt 130 eine Überführung des Kommissionierungs-Digitaler-Doppelgänger-Datensatzes in einen Fertigungs-Digitaler-Doppelgänger-Datensatz;
- im vierten Verfahrensschritt 140 eine Fertigung der physischen Personentransportanlage 2 anhand des Fertigungs-Digitaler-Doppelgänger-Datensatzes; sowie
- im fünften Verfahrensschritt 150 eine Installation der physischen Personentransportanlage 2 in einem Bauwerk 5 und die fortwährende Aktualisierung des ADDD 102.

Sämtliche Datenverarbeitung und die Datenspeicherung sowie die schrittweise Erstellung des ADDD 102 erfolgt hierbei beispielhaft über die Datenwolke 50.

Die Ausgangslage 99 zur Ausführung des erfindungsgemässen Verfahrens 100 kann eine Planung und spätere Erstellung oder ein Umbau eines Bauwerkes 5 wie beispielsweise eines Shoppingcenters, eines Flughafengebäudes, einer U-Bahnstation und dergleichen mehr sein. Hierbei ist gegebenenfalls auch eine als Fahrtreppe oder Fahrsteig ausgestaltete Personentransportanlage 2 vorgesehen. Aufgrund des Einsatzprofils und den Einbauverhältnissen wird die gewünschte Personentransportanlage 2 konfiguriert.

Dazu kann beispielsweise ein Internet-basiertes Konfigurierungsprogramm zur Verfügung stehen, welches dauerhaft oder temporär in einem Computersystem 111 installiert ist. Mittels verschiedener Eingabemasken 112 werden kundenspezifische Konfigurierungsdaten 113 abgefragt und in einem Logfile 104 unter einer Identifizierungsnummer gespeichert. Das Logfile 104 kann beispielsweise in der Datenwolke 50 gespeichert werden. Optional kann dem Architekten des Bauwerkes 5 anhand seiner kundenspezifischen Konfigurierungsdaten 113 ein digitales Hüllenmodell zur Verfügung gestellt werden, welches er zwecks Visualisierung des geplanten Gebäudes in sein digitales Gebäudemodell einfügen kann. Als kundenspezifische Konfigurierungsdaten 113 werden beispielsweise Koordinaten des vorgesehenen Einbauraumes, die erforderliche maximale Förderleistung, Förderhöhe, Einsatzumfeld, etc. abgefragt.

Wenn der Architekt mit der durch ihn konfigurierten Personentransportanlage 2 zufrieden ist, kann er diese unter Angabe der kundenspezifischen Konfigurierungsdaten 113 beispielsweise durch einen Hinweis auf die Identifizierungsnummer oder den Identifizierungscode des Logfiles 104 beim Hersteller in Auftrag geben.

Bei einem Bestellungseingang, dargestellt durch den zweiten Verfahrensschritt 120, der auf ein Logfile 104 referenziert wird, wird zunächst ein Digitaler-Doppelgänger-Datensatz 121 erstellt, der eine Soll-Konfiguration angibt. Beim Erstellen des Digitaler-Doppelgänger-Datensatzes 121 werden Bauteilmodell-Datensätze 114, 115, ..., NN verwendet, die für eine Fertigung der physischen Bauteile vorgesehen sind. Das heißt, dass für jedes physische Bauteil ein Bauteilmodell-Datensatz 114, 115, ..., NN beispielsweise in der Datenwolke 50 abgespeichert ist, der alle charakterisierenden Eigenschaften (Abmaße, Toleranzen, Werkstoffeigenschaften, Oberflächengüte, Schnittstelleninformationen zu weiteren Bauteilmodell-Datensätzen, etc.) dieses Bauteils in einer Soll-Konfiguration enthält.

Mittels der kundenspezifischen Konfigurierungsdaten 113 werden nun die zur Erstellung des Digitaler-Doppelgänger-Datensatz 121 erforderlichen Bauteilmodell-Datensätze 114, 115, ..., NN ausgewählt sowie deren Anzahl und Anordnung im dreidimensionalen Raum bestimmt. Anschließend werden diese Bauteilmodell-Datensätze 114, 115, ..., NN mittels ihrer Schnittstelleninformationen zu einem entsprechenden Digitaler-Doppelgänger-Datensatz 121 der Personentransportanlage 2 vereinigt. Hierbei ist es offensichtlich, dass eine Fahrtreppe oder ein Fahrsteig aus einigen tausend Einzelteilen besteht (repräsentiert durch die Bezugszeichen ..., NN) und dementsprechend ebenso viele Bauteilmodell-Datensätze 114, 115, ..., NN zur Erstellung eines Digitaler-Doppelgänger-Datensatz 121 herangezogen und verarbeitet werden müssen. Der Digitaler-Doppelgänger-Datensatz 121 weist für alle herzustellenden beziehungsweise zu beschaffenden physischen Bauteile Soll-Daten auf, welche charakterisierende Eigenschaften der zum Bau erforderlichen Bauteile der Personentransportanlage 2 in einer Soll-Konfiguration wiedergeben. Der Digitaler-Doppelgänger-Datensatz 121 kann wie durch den Pfeil 161 dargestellt, in der Datenwolke 50 abgespeichert werden und bildet gewissermaßen auch die Ausgangsbasis des ADDD 102.

Im dritten Verfahrensschritt 130 wird durch ein Ergänzen des digitalen, dreidimensionalen Doppelgänger-Datensatzes 121 mit produktionsspezifischen Daten 136 hernach der Kommissionierungs-Digitaler-Doppelgänger-Datensatz 135 erzeugt, der alle für die Produktion der kommissionierten Personentransportanlage 2 erforderlichen Fertigungsdaten enthält. Solche produktionsspezifischen Daten 136 können beispielsweise den Produktionsstandort, den an diesem Produktionsstandort verwendbaren Werkstoff, die zur Produktion des physischen Bauteiles eingesetzten Fertigungsmittel, Durchlaufzeiten und dergleichen mehr enthalten. Dieser Ergänzungsschritt wird, wie durch den Pfeil 162 dargestellt, am noch im Aufbau befindlichen ADDD 102 vollzogen.

Der Kommissionierungs-Digitaler-Doppelgänger-Datensatz 135 kann gemäss dem vierten Verfahrensschritt 140 anschließend in den Fertigungsanlagen 142 des Herstellerwerkes (hierfür stellvertretend die Abbildung einer Schweißlehre für ein Tragwerk 19) verwendet werden, um die Produktion der physischen Bauteile (hierfür stellvertretend die Abbildung eines Tragwerks 19) der physischen Personentransportanlage 2 zu ermöglichen. Im Kommissionierungs-Digitaler-Doppelgänger-Datensatz 135 sind ebenfalls die Montageschritte zur physischen Personentransportanlage 2 definiert. Bei und nach der Fertigung der physischen Bauteile sowie beim Zusammenbau der daraus entstehenden, physischen Personentransportanlage 2 werden zumindest ein Teil der charakterisierenden Merkmale von Bauteilen und montierten Baugruppen beispielsweise durch Vermessen und zerstörungsfreie Prüfverfahren erfasst und diese den entsprechenden virtuellen Bauteilen zugeordnet, in den noch unfertigen ADDD 102 übertragen. Hierbei ersetzen als charakterisierende Eigenschaften die an den physischen Bauteilen gemessenen IST-Daten die zugeordneten Soll-Daten des Kommissionierungs-Digitaler-Doppelgänger-Datensatzes 135. Mit dieser durch den Pfeil 163 dargestellten Übertragung wandelt sich mit fortlaufendem Produktionsfortschritt der Kommissionierungs-Digitaler-Doppelgänger-Datensatz 135 immer mehr hin zum ADDD 102. Dieser ist jedoch immer noch nicht ganz komplett, sondern bildet zuerst einen sogenannte Fertigstellungs-Digitaler-Doppelgänger-Datensatz.

Nach ihrer Fertigstellung kann die physische Personentransportanlage 2 wie im fünften Verfahrensschritt 150 dargestellt, in das nach den Plänen des Architekten erstellte Bauwerk 5 eingebaut werden. Da beim Einbau gewisse Einstellarbeiten ausgeführt werden müssen und schon bei der ersten Inbetriebnahme Betriebsdaten entstehen, werden auch diese Daten auf den Fertigstellungs-Digitaler-Doppelgänger-Datensatz übertragen und in charakterisierende Eigenschaften der davon betroffenen virtuellen Bauteile umgerechnet. Mit dieser durch den strichpunktierten Pfeil 164 dargestellten Aktualisierung wandelt sich der Fertigstellungs-Digitaler-Doppelgänger-Datensatz in den ADDD 102, der ebenso wie die physische Personentransportanlage 2 die volle Einsatzbereitschaft erreicht. Ab diesem Zeitpunkt kann der ADDD 102 jederzeit in das Computersystem 111 geladen und zur detaillierten Analyse des Zustandes der physischen Personentransportanlage 2 eingesetzt werden.

Der fünfte Verfahrensschritt 150 bildet jedoch nicht einen eigentlichen Abschluss des erfindungsgemässen Verfahrens 100. Dieser Abschluss erfolgt erst mit dem Lebensdauerende der physischen Personentransportanlage 2, wobei hier ein letztes Mal die Daten des ADDD 102 nutzbringend für den Entsorgungsvorgang der physischen Bauteile eingesetzt werden können.

Der ADDD 102 wird wie weiter oben ausführlich beschrieben und durch den strichpunktierten Pfeil 164 symbolisiert, während der gesamten Lebensdauer der Personentransportanlage 2 kontinuierlich und/oder periodisch durch die Übertragung von Messdaten aktualisiert. Diese Messdaten können wie bereits erwähnt, sowohl von der Erfassungseinrichtung 200, als auch durch eine Eingabe beispielsweise durch das Wartungspersonal erfasst und auf den ADDD 102 übertragen werden. Selbstverständlich lässt sich der ADDD 102 zusammen mit den zur Arbeit mit dem ADDD 102 erforderlichen Programmanweisungen 166 auf einem beliebigen Speichermedium als Computerprogrammprodukt 101 speichern.

Obwohl die Figuren 1 bis 4 unterschiedliche Aspekte der vorliegenden Erfindung betreffen und diese am Beispiel einer Fahrtreppe ausführlich beschrieben wurden, ist es offensichtlich, dass die beschriebenen Verfahrensschritte und eine entsprechende Vorrichtung gleichermaßen auch für Fahrsteige Anwendung finden. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren (100) zum Überwachen eines Zustands einer physischen Personentransportanlage (2) unter Verwendung eines Aktualisierter-Digitaler-Doppelgänger-Datensatzes ADDD (102), welcher charakterisierende Eigenschaften von Bauteilen der physischen Personentransportanlage (2) nach deren Zusammenbau und Installation in einem Bauwerk (5) in maschinen-verarbeitbarer Weise umfasst, wobei in der physischen Personentransportanlage (2) mindestens eine Erfassungseinrichtung (200) angeordnet ist, welche Veränderungen mindestens einer charakterisierenden Eigenschaft erfasst, die verschleißbedingt an einem umlaufend angeordneten, physischen Bauteil (7, 11, 31, 36) der physischen Personentransportanlage (2) auftreten, wobei der ADDD (102) erzeugt wird durch:
• Erstellen eines Kommissionierungs-Digitaler-Doppelgänger-Datensatzes (135) aus Bauteilmodell-Datensätzen (114 - NN) mit Soll-Daten, welche charakterisierende Eigenschaften von Bauteilen der Personentransportanlage (2) in einer Soll-Konfiguration wiedergeben;
• Erstellen eines Fertigstellungs-Digitaler-Doppelgänger-Datensatzes basierend auf dem Kommissionierungs-Digitaler-Doppelgänger-Datensatz (135) durch Messen von Ist-Daten, welche charakterisierende Eigenschaften von Bauteilen der physischen Personentransportanlage (2) in der tatsächlichen Konfiguration der Personentransportanlage (2) direkt nach deren Zusammenbau und Installation in einem Bauwerk (5) wiedergeben und Ersetzen von Soll-Daten in dem Kommissionierungs-Digitaler-Doppelgänger-Datensatz (135) durch entsprechende Ist-Daten;
• Erstellen und kontinuierliches Aktualisieren des ADDD (102) basierend auf dem Fertigstellungs-Digitaler-Doppelgänger-Datensatz durch Modifizieren des Fertigstellungs-Digitaler-Doppelgänger-Datensatzes während des Betriebs der physischen Personentransportanlage (2) unter Berücksichtigung von durch die Erfassungseinrichtung (200) erfassten Messwerten, welche Veränderungen von charakterisierenden Eigenschaften von umlaufenden Bauteilen (7, 11, 31, 36) der physischen Personentransportanlage (2) während deren Betriebes wiedergeben; indem diese Veränderungen als Messdaten auf den ADDD (102) übertagen werden und entsprechend charakterisierende Eigenschaften der von den übertragenen Messdaten betroffenen Bauteilmodell-Datensätze (114 - NN) aktualisiert werden; **dadurch gekennzeichnet, dass**
• die von der Erfassungseinrichtung (200) übermittelten Messdaten mit einer Zeitinformation (103) in einem Logfile (104) abgespeichert werden, und dass
• mittels der im Logfile (104) gespeicherten Messdaten sowie von im Logfile (104) gespeicherten Betriebsdaten mittels statistischer Methoden ein Veränderungstrend der Messwerte ermittelt wird.

2. Verfahren (100) nach Anspruch 1, wobei mittels der Überwachung Veränderungen und Veränderungstrends der mindestens einen, aktualisierten charakterisierenden Eigenschaft des umlaufend angeordneten physischen Bauteiles (7, 11, 31, 36) und deren Einfluss auf das Bauteil (7, 11, 31, 36) und auf die mit diesem Bauteil in Interaktion stehenden Bauteile mittels des ADDD (102) durch Berechnungen und/oder durch statische und dynamische Simulationen verfolgt und beurteilt werden.

3. Verfahren (100) nach Anspruch 1 oder 2, wobei die Übertragung der Messwerte periodisch oder abhängig vom Veränderungstrend der Messwerte erfolgt.

4. Verfahren (100) nach einem der vorangehenden Ansprüche, wobei die verschleißbedingte, charakterisierende Eigenschaft des umlaufend angeordneten physischen Bauteiles (7, 11, 31, 36) ausgewählt ist aus einer Gruppe umfassend geometrische Abmessungen des Bauteils, Gewicht des Bauteils und Oberflächenbeschaffenheit des Bauteils.

5. Verfahren (100) nach Anspruch 4, wobei die von der Erfassungseinrichtung (200) gemessene, verschleißbedingt veränderte, charakterisierende Eigenschaft des umlaufend angeordneten physischen Bauteiles (7, 11, 31, 36) die Länge einer Antriebskette (36) beziehungsweise ein aus der verschleißbedingten Längenänderung resultierender Durchhang der Antriebskette (36); die Länge einer Förderkette (31) beziehungsweise eine aus der verschleißbedingten Längenänderung resultierende Verschiebung eines Umlenkbogens (39) von deren Förderkettenspannvorrichtung (40); oder die Länge eines Handlaufes (11) beziehungsweise eine aus der verschleißbedingten Längenänderung resultierende Verschiebung eines Rollenbogens (83) von deren Handlaufspannvorrichtung (80) ist.

6. Verfahren (100) nach einem der vorangehenden Ansprüche, wobei das Überwachen des Zustandes der physischen Personentransportanlage (2) ein Simulieren zukünftiger charakterisierender Eigenschaften der physischen Personentransportanlage (2) unter Verwendung des ADDD (102) umfasst.

7. Verfahren (100) nach einem der vorangehenden Ansprüche, ferner aufweisend:
Planen von durchzuführenden Wartungsarbeiten an der physischen Personentransportanlage (2) basierend auf Informationen über den überwachten Zustand der Personentransportanlage (1).

8. Verfahren (100) nach einem der vorangehenden Ansprüche, ferner aufweisend: Beurteilen von Qualitätseigenschaften eines der umlaufend angeordneten Bauteile (7, 11, 31, 36) basierend auf einer Analyse von den ADDD (102) mehrerer, das betreffende umlaufende Bauteil (7, 11, 31, 36) enthaltender Personentransportanlagen (2).

9. Verfahren (100) nach einem der vorangehenden Ansprüche, wobei das Erstellen des Kommissionierungs-Digitaler-Doppelgänger-Datensatzes (135) ein Erstellen eines Digitaler-Doppelgänger-Datensatzes (121) aus Bauteilmodell-Datensätzen (114, ..., NN) unter Berücksichtigung von kundenspezifischen Konfigurierungsdaten (113), sowie ein Erstellen von Fertigungsdaten durch Modifizieren des Digitaler-Doppelgänger-Datensatzes (121) unter Berücksichtigung von produktionsspezifischen Daten (136), umfasst.

10. Vorrichtung (1) zur Durchführung des Verfahrens nach einem der Ansprüche 1 bis 9, umfassend:
• einen ADDD (102), welcher charakterisierende Eigenschaften von Bauteilen der physischen Personentransportanlage (2) in einer tatsächlichen Konfiguration der physischen Personentransportanlage (2) nach deren Zusammenbau und Installation in einem Bauwerk (5) in maschinen-verarbeitbarer Weise wiedergibt; sowie
• mindestens eine Erfassungseinrichtung (200), durch welche Veränderungen mindestens einer charakterisierenden Eigenschaft erfassbar sind, die verschleißbedingt an einem umlaufend angeordneten, physischen Bauteil (7, 11, 31, 36) der physischen Personentransportanlage (2) auftreten,
wobei diese Veränderungen als Messdaten zwecks Aktualisierung vorhandener Daten auf den ADDD (102) übertragbar sind, wobei der ADDD (102) erzeugbar ist durch:
• Erstellen eines Kommissionierungs-Digitaler-Doppelgänger-Datensatzes (135) mit Soll-Daten, welche charakterisierende Eigenschaften von Bauteilen der Personentransportanlage (2) in einer Soll-Konfiguration wiedergeben;
• Erstellen eines Fertigstellungs-Digitaler-Doppelgänger-Datensatzes basierend auf dem Kommissionierungs-Digitaler-Doppelgänger-Datensatz (135) durch Messen von Ist-Daten, welche charakterisierende Eigenschaften von Bauteilen der physischen Personentransportanlage (2) in der tatsächlichen Konfiguration der Personentransportanlage (2) direkt nach deren Zusammenbau und Installation in einem Bauwerk (5) wiedergeben und Ersetzen von Soll-Daten in dem Kommissionierungs-Digitaler-Doppelgänger-Datensatz (135) durch entsprechende Ist-Daten, wobei separate Messvorrichtungen und/oder in Bauteile integrierte oder an Bauteile angeordnete Sensoren zum Messen von Ist-Daten vorhanden sind; und
• Erstellen und kontinuierliches Aktualisieren des ADDD (102) basierend auf dem Fertigstellungs-Digitaler-Doppelgänger-Datensatz durch Modifizieren des Fertigstellungs-Digitaler-Doppelgänger-Datensatzes während des Betriebs der physischen Personentransportanlage (2) unter Berücksichtigung von durch die Erfassungseinrichtung (200) erfassten Messwerten, welche Änderungen von charakterisierenden Eigenschaften von umlaufenden Bauteilen (7, 11, 31, 36) der physischen Personentransportanlage (2) während deren Betriebes wiedergeben, **dadurch gekennzeichnet,**
• **dass** die von der Erfassungseinrichtung (200) erfassten Messdaten mit einer Zeitinformation (103) in einem Logfile (104) speicherbar sind; und
• **dass** mittels der im Logfile (104) gespeicherten Messdaten sowie von im Logfile (104) gespeicherten Betriebsdaten mittels statistischer Methoden ein Veränderungstrend der Messwerte ermittelbar ist.

11. Physische Personentransportanlage (2), umfassend eine Vorrichtung (1) gemäß Anspruch 10.

12. Computerprogrammprodukt (101), umfassend maschinenlesbare Programmanweisungen (166), welche bei Ausführung auf einer programmierbaren Vorrichtung (50, 111) die Vorrichtung (1) nach Anspruch 10 zum Durchführen oder Steuern eines Verfahrens (100) gemäß einem der Ansprüche 1 bis 9 veranlassen.

13. Computerlesbares Medium mit einem darauf gespeicherten Computerprogrammprodukt (101) gemäß Anspruch 12.

## Claims

1. Method (100) for monitoring a state of a physical passenger transport system (2) using an updated digital replica dataset UDRD (102) which comprises characterizing properties of components of the physical passenger transport system (2) in a machine-processable manner after assembly and installation thereof in a building (5), wherein at least one detection device (200) is arranged in the physical passenger transport system (2) and detects changes in at least one characterizing property that is caused by wear on a traveling physical component (7, 11, 31, 36) of the physical passenger transport system (2), wherein the UDRD (102) is generated by:
• creating a commissioning digital replica dataset (135) from component model datasets (114 - NN) having target data which reproduce characterizing properties of components of the passenger transport system (2) in a target configuration;
• creating a completion digital replica dataset based on the commissioning digital replica dataset (135) by measuring actual data which reproduce characterizing properties of components of the physical passenger transport system (2) in the actual configuration of the passenger transport system (2) immediately after the assembly and installation thereof in a structure (5), and replacing target data in the commissioning digital replica dataset (135) with corresponding actual data;
• creating and continuously updating the UDRD (102) on the basis of the completion digital replica dataset by modifying the completion digital replica dataset during the operation of the physical passenger transport system (2), taking into account measured values acquired by the detection device (200) which reproduce changes in characterizing properties of traveling components (7, 11, 31, 36) of the physical passenger transport system (2) during its operation; by these changes being transmitted to the UDRD (102) as measurement data and characterizing properties of the component model datasets (114 - NN) affected by the transmitted measurement data being updated accordingly; **characterized in that**
• the measurement data transmitted by the detection device (200) are stored with time information (103) in a log file (104), **and in that**
• a change trend in the measured values is determined by means of statistical methods using the measurement data stored in the log file (104) and operating data stored in the log file (104).

2. Method (100) according to claim 1, wherein the monitoring tracks and evaluates changes and change trends in the at least one updated characterizing property of the traveling physical component (7, 11, 31, 36) and the influence of said changes on the component (7, 11, 31, 36) and on the components interacting with this component by means of the UDRD (102) using calculations and/or using static and dynamic simulations.

3. Method (100) according to claim 1 or claim 2, wherein the transmission of the measured values takes place periodically or on the basis of the change trend in the measured values.

4. Method (100) according to any of the preceding claims, wherein the wear-related characterizing property of the traveling physical component (7, 11, 31, 36) is selected from a group comprising geometric dimensions of the component, weight of the component, and surface quality of the component.

5. Method (100) according to claim 4, wherein the characterizing property of the traveling physical component (7, 11, 31, 36), which property is measured by the detection device (200) and is changed due to wear, is the length of a drive chain (36) or is slack in the drive chain (36) resulting from wear-related change in length; is the length of a conveyor chain (31) or a displacement of a deflection curve (39) by the conveyor chain tensioning device (40) thereof resulting from the wear-related change in length; or is the length of a handrail (11) or a displacement of a roller curve (83) by the handrail tensioning device (80) thereof resulting from the wear-related change in length.

6. Method (100) according to any of the preceding claims, wherein monitoring the state of the physical passenger transport system (2) comprises simulating future characterizing properties of the physical passenger transport system (2) using the UDRD (102).

7. Method (100) according to any of the preceding claims, further comprising:
planning maintenance work to be carried out on the physical passenger transport system (2) based on information about the monitored state of the passenger transport system (1).

8. Method (100) according to any of the preceding claims, further comprising: evaluating quality properties of one of the traveling components (7, 11, 31, 36), based on an analysis of the UDRD (102) of a plurality of passenger transport systems (2) containing the relevant traveling component (7, 11, 31, 36).

9. Method (100) according to any of the preceding claims, wherein creating the commissioning digital replica dataset (135) comprises creating a digital replica dataset (121) from component model datasets (114, ..., NN) taking into account customer-specific configuration data (113), as well as creating manufacturing data by modifying the digital replica dataset (121) taking into account production-specific data (136).

10. Device (1) for carrying out the method according to any of claims 1 to 9, comprising:
• a UDRD (102) which reproduces characterizing properties of components of the physical passenger transport system (2) in an actual configuration of the physical passenger transport system (2) in a machine-processable manner after assembly and installation thereof in a structure (5); and
• at least one detection device (200) which can detect changes in at least one characterizing property, which changes occur due to wear on a traveling physical component (7, 11, 31, 36) of the physical passenger transport system (2);
wherein these changes can be transmitted to the UDRD (102) as measurement data for the purpose of updating existing data, wherein the UDRD (102) can be generated by:
• creating a commissioning digital replica dataset (135) having target data which reproduce characterizing properties of components of the passenger transport system (2) in a target configuration;
• creating a completion digital replica dataset based on the commissioning digital replica dataset (135) by measuring actual data which reproduce characterizing properties of components of the physical passenger transport system (2) in the actual configuration of the passenger transport system (2) immediately after the assembly and installation thereof in a structure (5), and replacing target data in the commissioning digital replica dataset (135) with corresponding actual data, wherein separate measurement devices and/or sensors integrated in or arranged on components for measuring actual data are present; and
• creating and continuously updating the UDRD (102) based on the completion digital replica dataset by modifying the completion digital replica dataset during the operation of the physical passenger transport system (2), taking into account measured values acquired by the detection device (200) which reproduce changes in characterizing properties of traveling components (7, 11, 31, 36) of the physical passenger transport system (2) during operation thereof, **characterized**
• **in that** the measurement data captured by the detection device (200) can be stored with time information (103) in a log file (104); and
• **in that** a change trend in the measured values can be determined by means of statistical methods using the measurement data stored in the log file (104) and operating data stored in the log file (104).

11. Physical passenger transport system (2) comprising a device (1) according to claim 10.

12. Computer program product (101) comprising machine-readable program instructions (166) which, when executed on a programmable device (50, 111), prompt the device (1) according to claim 10 to carry out or control a method (100) according to any of claims 1 to 9.

13. Computer-readable medium having a computer program product (101) according to claim 12 stored therein.

## Revendications

1. Procédé (100) permettant la surveillance d'un état d'un système de transport de personnes (2) physique à l'aide d'un jeu de données de double numérique mis à jour, ADDD (102), qui comprend des propriétés caractéristiques d'éléments structuraux du système de transport de personnes (2) physique après son assemblage et son installation dans un bâtiment (5) d'une manière pouvant être traitée par machine, dans lequel au moins un appareil de détection (200) est disposé dans le système de transport de personnes (2) physique, lequel appareil de détection détecte des modifications d'au moins une propriété caractéristique, lesquelles apparaissent de manière liée à l'usure sur un élément structural (7, 11, 31, 36) physique disposé de manière à pouvoir circuler du système de transport de personnes (2) physique, dans lequel l'ADDD (102) est généré par :
• la création d'un jeu de données de double numérique de mise en service (135) à partir de jeux de données de modèles d'éléments structuraux (114 - NN) comportant des données de consigne qui reproduisent les propriétés caractéristiques des éléments structuraux du système de transport de personnes (2) dans une configuration de consigne ;
• la création d'un jeu de données de double numérique d'achèvement sur la base du jeu de données de double numérique de mise en service (135) par la mesure de données réelles qui reproduisent les propriétés caractéristiques des éléments structuraux du système de transport de personnes (2) physique dans la configuration réelle du système de transport de personnes (2) immédiatement après son assemblage et son installation dans un bâtiment (5) et par le remplacement des données de consigne dans le jeu de données de double numérique de mise en service (135) par les données réelles correspondantes ;
• la création et la mise à jour continue de l'ADDD (102) sur la base du jeu de données de double numérique d'achèvement par la modification du jeu de données de double numérique d'achèvement pendant le fonctionnement du système de transport de personnes (2) physique en tenant compte de valeurs de mesure détectées par l'appareil de détection (200) qui reproduisent les modifications des propriétés caractéristiques des éléments structuraux (7, 11, 31, 36) en circulation du système de transport de personnes (2) physique pendant son fonctionnement ; en transférant lesdites modifications sur l'ADDD (102) en tant que données de mesure et en mettant à jour les propriétés caractéristiques correspondantes des jeux de données de modèles d'éléments structuraux (114 - NN) concernés par les données de mesure transférées ;
**caractérisé en ce que**
• les données de mesure transmises par l'appareil de détection (200) sont mémorisées avec une information de temps (103) dans un fichier journal (104), **et en ce que**
• une tendance de modification des valeurs de mesure est déterminée au moyen des données de mesure mémorisées dans le fichier journal (104) ainsi qu'au moyen de données de fonctionnement mémorisées dans le fichier journal (104) au moyen de méthodes statistiques.

2. Procédé (100) selon la revendication 1, dans lequel, au moyen de la surveillance, les modifications et les tendances de modification de l'au moins une propriété caractéristique mise à jour de l'élément structural (7, 11, 31, 36) physique disposé de manière à pouvoir circuler et leur influence sur l'élément structural (7, 11, 31, 36) et sur les éléments structuraux interagissant avec ledit élément structural sont suivies et évaluées au moyen de l'ADDD (102) par des calculs et/ou par des simulations statiques et dynamiques.

3. Procédé (100) selon la revendication 1 ou 2, dans lequel le transfert des valeurs de mesure est effectué périodiquement ou en fonction de la tendance de modification des valeurs de mesure.

4. Procédé (100) selon l'une des revendications précédentes, dans lequel la propriété caractéristique liée à l'usure de l'élément structural (7, 11, 31, 36) physique disposé de manière à pouvoir circuler est choisie dans un groupe comprenant dimensions géométriques de l'élément structural, poids de l'élément structural et condition de surface de l'élément structural.

5. Procédé (100) selon la revendication 4, dans lequel la propriété caractéristique de l'élément structural (7, 11, 31, 36) physique disposé de manière à pouvoir circuler, laquelle est mesurée par l'appareil de détection (200) et modifiée de manière liée à l'usure, est la longueur d'une chaîne d'entraînement (36) ou un fléchissement de la chaîne d'entraînement (36), lequel résulte de la modification de la longueur liée à l'usure ; la longueur d'une chaîne de convoyage (31) ou un décalage d'un arc de déviation (39) de son dispositif de tension de chaîne de convoyage (40), lequel décalage résulte de la modification de la longueur liée à l'usure ; ou la longueur d'une main courante (11) ou un décalage d'un arc à rouleaux (83) de son dispositif de tension de main courante (80), lequel décalage résulte de la modification de la longueur liée à l'usure.

6. Procédé (100) selon l'une des revendications précédentes, dans lequel la surveillance de l'état du système de transport de personnes (2) physique comprend une simulation de propriétés caractéristiques futures du système de transport de personnes (2) physique à l'aide de l'ADDD (102).

7. Procédé (100) selon l'une des revendications précédentes, présentant en outre : la planification de travaux de maintenance à mettre en oeuvre sur le système de transport de personnes (2) physique sur la base d'informations concernant l'état surveillé du système de transport de personnes (1).

8. Procédé (100) selon l'une des revendications précédentes, présentant en outre : l'évaluation de propriétés de qualité de l'un des éléments structuraux (7, 11, 31, 36) disposés de manière à pouvoir circuler sur la base d'une analyse de l'ADDD (102) de plusieurs systèmes de transport de personnes (2) contenant ledit élément structural (7, 11, 31, 36) en circulation.

9. Procédé (100) selon l'une des revendications précédentes, dans lequel la création du jeu de données de double numérique de mise en service (135) comprend une création d'un jeu de données de double numérique (121) àpartir de jeux de données de modèles d'éléments structuraux (114, ..., NN) en tenant compte de données de configuration (113) spécifiques au client, ainsi qu'une création de données de fabrication par la modification du jeu de données de double numérique (121) en tenant compte de données (136) spécifiques à la production.

10. Dispositif (1) permettant la mise en oeuvre du procédé selon l'une des revendications 1 à 9, comprenant :
• un ADDD (102) qui reflète les propriétés caractéristiques d'éléments structuraux du système de transport de personnes (2) physique dans une configuration réelle du système de transport de personnes (2) physique après son assemblage et son installation dans un bâtiment (5) d'une manière pouvant être traitée par machine ; ainsi que
• au moins un appareil de détection (200) au moyen duquel les modifications d'au moins une propriété caractéristique peuvent être détectées, lesquelles apparaissent de manière liée à l'usure sur un élément structural (7, 11, 31, 36) physique disposé de manière à pouvoir circuler du système de transport de personnes (2) physique ;
dans lequel lesdites modifications peuvent être transmises à l'ADDD (102) en tant que données de mesure en vue d'une mise à jour de données présentes, dans lequel l'ADDD (102) peut être généré par :
• la création d'un jeu de données de double numérique de mise en service (135) comportant des données de consigne qui reproduisent les propriétés caractéristiques des éléments structuraux du système de transport de personnes (2) dans une configuration de consigne ;
• la création d'un jeu de données de double numérique d'achèvement sur la base du jeu de données de double numérique de mise en service (135) par la mesure de données réelles qui reproduisent les propriétés caractéristiques des éléments structuraux du système de transport de personnes (2) physique dans la configuration réelle du système de transport de personnes (2) immédiatement après son assemblage et son installation dans un bâtiment (5) et par le remplacement des données de consigne dans le jeu de données de double numérique de mise en service (135) par des données réelles correspondantes, dans lequel des dispositifs de mesure séparés et/ou des capteurs intégrés dans les éléments structuraux ou disposés sur les éléments structuraux sont présents pour la mesure des données réelles ; et
• la création et la mise à jour continue de l'ADDD (102) sur la base du jeu de données de double numérique d'achèvement par la modification du jeu de données de double numérique d'achèvement pendant le fonctionnement du système de transport de personnes (2) physique en tenant compte de valeurs de mesure détectées par l'appareil de détection (200) qui reproduisent les modifications des propriétés caractéristiques des éléments structuraux (7, 11, 31, 36) en circulation du système de transport de personnes (2) physique pendant son fonctionnement, **caractérisé en ce que**
• les données de mesure détectées par l'appareil de détection (200) peuvent être mémorisées avec une information de temps (103) dans un fichier journal (104) ; et
• **qu**'une tendance de modification des valeurs de mesure peut être déterminée au moyen des données de mesure mémorisées dans le fichier journal (104) ainsi qu'au moyen de données de fonctionnement mémorisées dans le fichier journal (104) au moyen de méthodes statistiques.

11. Système de transport de personnes (2) physique, comprenant un dispositif (1) selon la revendication 10.

12. Produit programme informatique (101), comprenant des instructions de programme lisibles par machine (166) qui, lorsqu'elles sont exécutées sur un dispositif programmable (50, 111), amènent le dispositif (1) selon la revendication 10 à mettre en oeuvre ou à commander un procédé (100) selon l'une des revendications 1 à 9.

13. Support lisible par ordinateur comportant un produit programme informatique (101) selon la revendication 12 mémorisé sur celui-ci.
